# EUROPEAN PATENT APPLICATION

(11) **EP 4 726 094 A1**
(43) Date of publication of application: **15.04.2026**
(21) Application number: 24818532.4
(22) Date of filing: 29.05.2024
(51) Int. Cl.: D06F 33/30, G05B 19/042

(54) **CONTROL METHOD AND APPARATUS, AND DEVICE AND STORAGE MEDIUM**

(30) Priority: 07.06.2023 CN 202310671338; 19.06.2023 CN 202310730955; 19.06.2023 CN 202310732583
(71) Applicant: Qingdao Haier Washing Machine Co., Ltd., Qingdao, Shandong 266101 (CN); HAIER SMART HOME CO., LTD., Qingdao, Shandong 266101 (CN)
(72) Inventor: HE, Yunfeng, Qingdao, Shandong 266101 (CN); SHI, Jiang, Qingdao, Shandong 266101 (CN); CHEN, Yuling, Qingdao, Shandong 266101 (CN); LI, Zuoqiang, Qingdao, Shandong 266101 (CN)
(74) Representative: Linage González, Rafael
(86) International application number: PCT/CN2024/095902
(87) International publication number: WO 2024/250999

(57) **Abstract**

Provided are a control method, apparatus, and device and a storage medium. The control method is applied to a primary electrical appliance including a first display panel. The control method includes: when the first display panel is in a first interactive state, in response to a first operation by a user on the first display panel, controlling the first display panel to switch to a second interactive state; and in response to a second operation by the user on the first display panel in the second interactive state, controlling a secondary electrical appliance communicatively connected to the primary electrical appliance to start operating based on the second operation.

## Description

This application claims priority to Chinese Patent Application No. 202310671338.9 filed with the China National Intellectual Property Administration (CNIPA) on Jun. 7, 2023, Chinese Patent Application No. 202310730955.1 filed with the CNIPA on Jun. 19, 2023, and Chinese Patent Application No. 202310732583.6 filed with the CNIPA on Jun. 19, 2023, the disclosures of which are incorporated herein by reference in their entireties.

### TECHNICAL FIELD

The present application relates to the field of control technology, for example, a control method, apparatus, and device and a storage medium.

### BACKGROUND

When arranging household appliances within a living space, a user typically places, in two locations close to each other, multiple appliances (for example, a washing machine and a dryer) that are frequently used in succession, so that the appliances can be used in succession in a convenient and efficient manner.

In the related art, to save the space occupied by electrical appliances, multiple appliances frequently used in succession may be stacked. For example, a dryer is often placed on a washing machine. However, after the electrical appliances are stacked, the display screen of the electrical appliance placed on the upper side is located at a relatively high position, resulting in the inconvenience for the user to operate the upper electrical appliance, thereby adversely affecting the user experience.

### SUMMARY

The present application provides a control method, apparatus, and device and a storage medium, overcoming the inconvenience for a user to operate an electrical appliance placed at an excessively high position and thus improving the user experience.

The present application provides a control method. The control method is applied to a primary electrical appliance. The primary electrical appliance includes a first display panel.

The control method includes: when the first display panel is in a first interactive state, in response to a first operation by a user on the first display panel, controlling the first display panel to switch to a second interactive state; and in response to a second operation by the user on the first display panel in the second interactive state, controlling a secondary electrical appliance communicatively connected to the primary electrical appliance to start operating based on the second operation.

The present application provides a control apparatus. The control apparatus is configured in a primary electrical appliance. The primary electrical appliance includes a first display panel.

The control apparatus includes a display control module and a start control module.

The display control module is configured to, when the first display panel is in a first interactive state, in response to a first operation by a user on the first display panel, control the first display panel to switch to a second interactive state.

The start control module is configured to, in response to a second operation by the user on the first display panel in the second interactive state, control a secondary electrical appliance communicatively connected to the primary electrical appliance to start operating based on the second operation.

The present application provides a control device. The control device includes a memory, a processor, a bus, and a communication interface. The memory is configured to store computer-executable instructions. The processor is connected to the memory through the bus. The processor is configured to, when the control device is operating, execute the computer-executable instructions stored in the memory to cause the control device to perform the control method.

The present application provides a computer-readable storage medium. The computer-readable storage medium stores instructions which, when executed by a computer, cause the computer to perform the control method.

The present application provides a computer program product. The computer program product includes computer instructions which, when executed by a computer, cause the computer to perform the control method.

The computer instructions may be stored, in whole or in part, on the computer-readable storage medium. The computer-readable storage medium may be co-packaged with the processor of the control device or may be packaged separately from the processor of the control device. This is not limited in the present application.

### BRIEF DESCRIPTION OF DRAWINGS

FIG. 1 is a flowchart of a control method according to embodiments of the present application.
FIG. 2 is a flowchart of a control method according to embodiments of the present application.
FIG. 3 is a diagram of a first interactive interface according to embodiments of the present application.
FIG. 4 is a diagram of a first interactive interface according to embodiments of the present application.
FIG. 5 is a diagram of a second interactive interface according to embodiments of the present application.
FIG. 6 is a diagram of a second interactive interface according to embodiments of the present application.
FIG. 7 is a diagram of a second interactive interface according to embodiments of the present application.
FIG. 8 is a diagram of a second interactive interface according to embodiments of the present application.
FIG. 9 is a flowchart of a control method according to embodiments of the present application.
FIG. 10 is a diagram illustrating the key layout of a first display panel according to embodiments of the present application.
FIG. 11 is a diagram illustrating the key layout of a first display panel according to embodiments of the present application.
FIG. 12 is a flowchart of a control method according to embodiments of the present application.
FIG. 13 is a diagram illustrating a display process of a first display panel according to embodiments of the present application.
FIG. 14 is a flowchart of a control method according to embodiments of the present application.
FIG. 15 is a diagram illustrating a display process of a first display panel according to embodiments of the present application.
FIG. 16 is a flowchart of a control method according to embodiments of the present application.
FIG. 17 is a diagram illustrating a layout of a first display panel according to embodiments of the present application.
FIG. 18 is a diagram illustrating a layout of a first display panel according to embodiments of the present application.
FIG. 19 is a diagram illustrating a layout of a first display panel according to embodiments of the present application.
FIG. 20 is a flowchart of a control method according to embodiments of the present application.
FIG. 21 is a diagram illustrating the structure of a control apparatus according to embodiments of the present application.
FIG. 22 is a diagram illustrating the structure of a control device according to embodiments of the present application.

### DETAILED DESCRIPTION

The following describes the control method, apparatus, and device and the storage medium according to embodiments of the present application in detail with reference to drawings.

In the present application, "and/or" indicates an association between associated objects in three manners. For example, "A and/or B" indicates the presence of A alone, the presence of both A and B, or the presence of B alone.

In the specification and drawings of the present application, terms such as "first" and "second" are used to distinguish between different objects or to distinguish between different treatments of the same object, rather than to indicate a particular order of the objects.

In addition, in the present application, terms "including", "having", and any variations thereof are intended to encompass a non-exclusive inclusion. For example, a process, method, system, product, or device that includes a series of steps or elements not only includes the listed steps or elements but may further optionally include steps or elements that are not listed or inherent to such process, method, system, product, or device.

In embodiments of the present application, words such as "exemplary" or "for example" indicate examples, illustrations, or descriptions. Any embodiment or design that is described as "exemplary" or "for example" in embodiments of the present application should not be construed as being more preferred or advantageous than other embodiments or designs. Specifically, the use of words such as "exemplary" or "for example" is intended to present relevant concepts in a specific manner.

In the description of the present application, unless otherwise specified, the term "a plurality of" or "multiple" means two or more.

In technical solutions of the present application, the acquisition, storage, use, and processing of data all comply with relevant provisions of national laws and regulations.

In the related art, to save the space occupied by electrical appliances, multiple appliances frequently used in succession may be stacked. For example, a dryer is often placed on a washing machine. However, after the electrical appliances are stacked, the display screen of the electrical appliance placed on the upper side is located at a relatively high position, resulting in the inconvenience for a user to operate the upper electrical appliance, thereby adversely affecting the user experience.

To address the problem in the related art, embodiments of the present application provide a control method. In this method, the user can operate on a first display panel of a primary electrical appliance to switch a first interactive state corresponding to the primary electrical appliance displayed on the first display panel to a second interactive state corresponding to a secondary electrical appliance. In this manner, the user can control the secondary electrical appliance to start operating based on the operation performed on the first display panel in the second interactive state, thereby overcoming the inconvenience for the user to operate the electrical appliance placed at an excessively high position.

The control method of embodiments of the present application can be executed by the control apparatus of any embodiment of the present application. The control apparatus can be implemented in software and/or hardware and integrated into the control device for executing the control method. The control device may be the primary electrical appliance of embodiments of the present application or may be a component of the primary electrical appliance, such as the main control board of the primary electrical appliance.

The following describes the control method of this embodiment of the present application in conjunction with drawings.

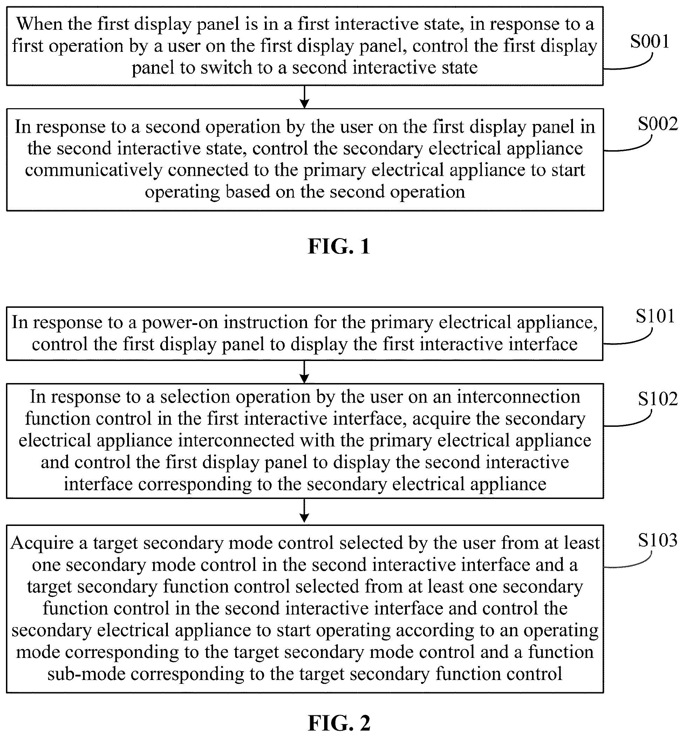

Referring to FIG. 1, the control method of this embodiment of the present application includes S001 and S002.

In S001, when the first display panel is in a first interactive state, in response to a first operation by a user on the first display panel, the first display panel is controlled to switch to a second interactive state.

The control method of this embodiment of the present application can be applied to a primary electrical appliance. In an embodiment, the primary electrical appliance may be an electrical appliance placed at a location convenient for user operation. Correspondingly, the secondary electrical appliance of this embodiment of the present application may be an electrical appliance placed at a location inconvenient for user operation. In an example, in this embodiment of the present application, the primary electrical appliance may be a washing machine, and the secondary electrical appliance may be a dryer. Alternatively, in practical application, the primary electrical appliance may be a dryer, and the secondary electrical appliance may be a washing machine.

The primary electrical appliance may include a first display panel. In an example, the first display panel may be a thin-film transistor (TFT) display screen.

In an embodiment, the first display panel may be fixedly provided with a power key (or the power key may be provided at another position of the primary electrical appliance).

The first display panel in the first interactive state may include a control or a key configured to trigger the operating mode of the primary electrical appliance, while the first display panel in the second interactive state may include a control or a key configured to trigger the operating mode of the secondary electrical appliance.

In S002, in response to a second operation by the user on the first display panel in the second interactive state, the secondary electrical appliance communicatively connected to the primary electrical appliance is controlled to start operating based on the second operation.

The second operation may be a selection operation or a trigger operation performed on the control or the key on the first display panel in the second interactive state. The operating mode of the secondary electrical appliance is determined based on the second operation. The secondary electrical appliance starts operating according to this operating mode.

Based on the previous embodiment, an embodiment of the present application provides a control method. In the control method, the user can operate the first display panel of the primary electrical appliance to switch the operation interface displayed on the first display panel from the operation interface of the primary electrical appliance to the operation interface of the secondary electrical appliance. This enables the secondary electrical appliance to start operating based on the operation by the user on the operation interface of the secondary electrical appliance displayed on the primary electrical appliance, thereby overcoming the inconvenience for the user to operate the electrical appliance placed at an excessively high position.

The control method of this embodiment of the present application can be executed by the control apparatus of any embodiment of the present application. The control apparatus can be implemented in software and/or hardware and integrated into the control device for executing the control method. The control device may be the primary electrical appliance of this embodiment of the present application or may be a component of the primary electrical appliance, such as the main control board of the primary electrical appliance.

The following describes the control method of this embodiment of the present application in conjunction with drawings.

Referring to FIG. 2, the control method of this embodiment of the present application includes S101 to S103.

In S101, in response to a power-on instruction for the primary electrical appliance, the first display panel is controlled to display the first interactive interface.

The control method of this embodiment of the present application can be applied to the primary electrical appliance. In a possible embodiment, the primary electrical appliance may be an electrical appliance placed at a location convenient for user operation. Correspondingly, the secondary electrical appliance of this embodiment of the present application may be an electrical appliance placed at a location inconvenient for user operation. In an example, in this embodiment of the present application, the primary electrical appliance may be a washing machine, and the secondary electrical appliance may be a dryer. Alternatively, in practical application, the primary electrical appliance may be a dryer, and the secondary electrical appliance may be a washing machine.

The primary electrical appliance may include a first display panel. In an example, the first display panel may be a TFT display screen.

In a possible embodiment, the first display panel may be fixedly provided with a power key (or the power key may be provided at another position of the primary electrical appliance). In this embodiment of the present application, the switch instruction may be an instruction triggered by the user performing a touch operation on the power key. Upon detecting the power-on instruction, the control apparatus may control the first display panel to display the first interactive interface.

The first interactive interface may display at least one primary mode control and at least one primary function control. The primary mode control is configured to trigger the operating mode of the primary electrical appliance. The primary function control is configured to trigger the function sub-mode of the primary electrical appliance. When the user needs to use the primary electrical appliance, the user may select a target primary mode control from the at least one primary mode control and a target primary function control from the at least one primary function control according to needs. The control apparatus may then control the primary electrical appliance to run according to the operating mode corresponding to the target primary mode control and the function sub-mode corresponding to the target primary function control based on the selection operation by the user.

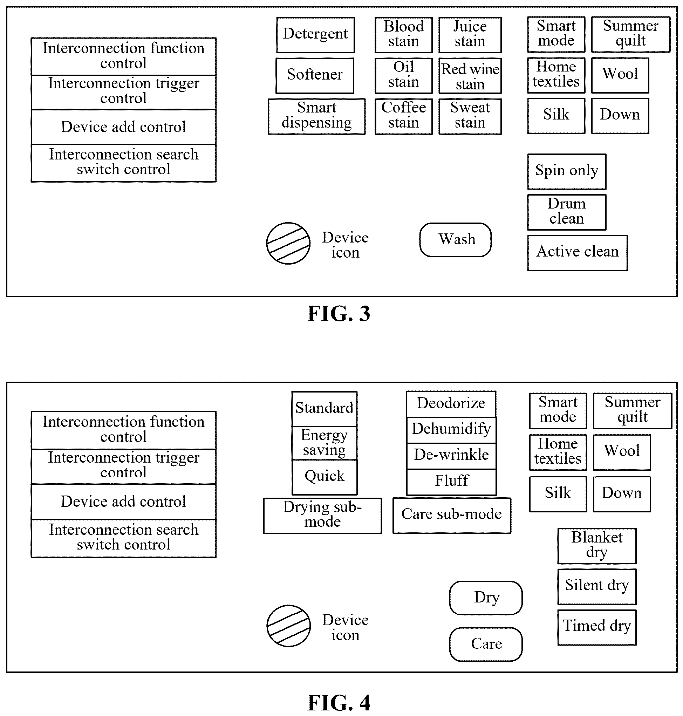

Referring to FIG. 3, in an example in which the primary electrical appliance is a washing machine, an embodiment of the present application provides a diagram of a first interactive interface. As shown in FIG. 3, the at least one primary mode control in the first interactive interface may include a mode control corresponding to the operating mode of washing configured to trigger the washing mode of the washing machine. The primary function controls in the first interactive interface may include function controls unique to the washing machine, such as smart dispensing, softener, detergent, and at least one dispensing mode (for example, the dispensing modes corresponding to "blood stain", "oil stain", "coffee stain", "juice stain", "red wine stain", and "sweat stain" in FIG. 3). By way of example, when the user performs a touch operation on the primary function control of smart dispensing, the control apparatus can lock the smart dispensing function of the washing machine, enabling the washing machine to intelligently dispense softener and detergent. When the user performs a touch operation on both the primary function control of softener and the primary function control of a target dispensing mode among the at least one dispensing mode, the control apparatus can lock the dispensing function of softener corresponding to these two primary function controls. Similarly, when the user performs a touch operation on both the primary function control of detergent and the primary function control of the target dispensing mode among the at least one dispensing mode, the control apparatus can lock the dispensing function of detergent corresponding to these two primary function controls. In addition, the at least one primary function control in the first interactive interface may also include function controls such as spin only, drum clean, active clean, smart mode, down, home textiles, wool, silk, and summer quilt.

Referring to FIG. 4, in an example in which the primary electrical appliance is a dryer, an embodiment of the present application provides a diagram of a first interactive interface. As shown in FIG. 4, the at least one primary mode control in the first interactive interface may include a mode control corresponding to the operating mode of drying configured to trigger the drying mode of the dryer and a mode control corresponding to the operating mode of care configured to trigger the care mode of the dryer; and the at least one primary function control in the first interactive interface may include function controls unique to the dryer, such as a drying sub-mode and at least one drying sub-mode option (for example, the drying sub-mode options corresponding to "standard", "energy saving", and "quick" above the "drying sub-mode" in FIG. 4). By way of example, when the user performs a touch operation on both the primary function control of drying sub-mode and the primary function control of a target drying sub-mode option among the at least one drying sub-mode option, the control apparatus can lock the drying sub-mode corresponding to the primary function control of the target drying sub-mode option. Moreover, the at least one primary function control may also include function controls unique to the dryer, such as a care sub-mode and at least one care sub-mode option (for example, the care sub-mode options corresponding to "dehumidify", "de-wrinkle", "deodorize", and "fluff" above the "care sub-mode" in FIG. 4). By way of example, when the user performs a touch operation on both the primary function control of care sub-mode and the primary function control of a target care sub-mode option among the at least one care sub-mode option, the control apparatus can lock the care sub-mode corresponding to the primary function control of the target care sub-mode option. In addition, the at least one primary function control in the first interactive interface may also include function controls such as blanket dry, drum dry, timed dry, smart mode, down, home textiles, wool, silk, and summer quilt.

The first interactive interface also displays an interconnection trigger control. After in response to the power-on instruction for the primary electrical appliance, controlling the first display panel to display the first interactive interface, the control method of this embodiment of the present application also includes: in response to a selection operation by the user on the interconnection trigger control, controlling the first display panel to display a third interactive interface; in response to a selection operation by the user on a target to-be-selected device control among the at least one to-be-selected device control, determining a to-be-selected electrical appliance corresponding to the target to-be-selected device control as the secondary electrical appliance; and controlling the first display panel to switch from the third interactive interface back to the first interactive interface and adding a device icon of the secondary electrical appliance at a preset position of the first interactive interface.

The third interactive interface displays at least one to-be-selected device control. The at least one to-be-selected device control corresponds one-to-one to at least one to-be-selected electrical appliance. The at least one to-be-selected electrical appliance is at least one device communicatively connected to the primary electrical appliance. By way of example, in an example in which the primary electrical appliance is a washing machine, the at least one to-be-selected electrical appliance may include a dryer, an air conditioner, or a television.

In practical application, there are many types of electrical appliances at the user's home. Different electrical appliances may be placed in different areas (for example, a washing machine, an air conditioner, and a television may be placed in different areas such as the living room, the balcony, and the bedroom). When the user needs to use these electrical appliances simultaneously, operations need to be performed separately on these electrical appliances. Since these electrical appliances are placed in multiple areas, the user experience is not very good. Based on this, in this embodiment of the present application, the interconnection trigger control may be provided on the first interactive interface. Through the interconnection trigger control, the secondary electrical appliance currently interconnected with the primary electrical appliance can be switched to another electrical appliance needed by the user.

In an example in which the primary electrical appliance is a washing machine, when the user needs to switch the secondary electrical appliance, a selection operation may be performed on the interconnection trigger control in the first interactive interface shown in FIG. 3 to trigger the first display panel to display the third interactive interface including the at least one to-be-selected device control. Then, the user may select the needed target to-be-selected device control from the at least one to-be-selected device control in the third interactive interface so that the current secondary electrical appliance can be switched (or set) to the electrical appliance corresponding to the target to-be-selected device control. Similarly, in an example in which the primary electrical appliance is a dryer, when the user needs to switch the secondary electrical appliance, a selection operation may be performed on the interconnection trigger control in FIG. 4 to trigger the first display panel to display the third interactive interface including the at least one to-be-selected device control.

To help the user determine which secondary electrical appliance is currently interconnected with the primary electrical appliance to avoid a misoperation of the user, as shown in FIG. 3 or FIG. 4, in this embodiment of the present application, the device icon of the secondary electrical appliance may be fixedly displayed in the first interactive interface.

In practical application, in this embodiment of the present application, the secondary electrical appliance may alternatively be switched (or set) in another manner. By way of example, in an APP for controlling the primary electrical appliance and the secondary electrical appliance, the user may perform an interconnection operation on a needed electrical appliance and the primary electrical appliance (the interconnection operation interface of the APP is similar to the third interactive interface of this embodiment of the present application) to set the needed electrical appliance as the secondary electrical appliance.

The first interactive interface also displays a device add control. After in response to the power-on instruction for the primary electrical appliance, controlling the first display panel to display the first interactive interface, the control method of this embodiment of the present application also includes: in response to a selection operation by the user on the device add control, controlling the first display panel to display a fourth interactive interface; and in response to a selection operation by the user on a target candidate device control among the at least one candidate device control, establishing a communicative connection relationship between a candidate electrical appliance corresponding to the target candidate device control and the primary electrical appliance and adding the candidate electrical appliance corresponding to the target candidate device control to the at least one to-be-selected electrical appliance.

The fourth interactive interface displays at least one candidate device control. The at least one candidate device control corresponds one-to-one to at least one candidate electrical appliance. The at least one candidate electrical appliance is at least one device operating a function of being searched. By way of example, in an example in which the primary electrical appliance is a washing machine, the at least one candidate electrical appliance may include a dryer, an air conditioner, a television, or a fan.

In an example in which the primary electrical appliance is a washing machine, when the user has a new electrical appliance at home, a selection operation may be performed on the device add control in the first interactive interface shown in FIG. 3 to trigger the first display panel to display the fourth interactive interface including the at least one candidate device control. Then, the user may select the needed target candidate device control from the at least one candidate device control to add the new electrical appliance to the at least one candidate electrical appliance for the user to select when setting the secondary electrical appliance. Similarly, in an example in which the primary electrical appliance is a dryer, a selection operation may be performed on the device add control in the first interactive interface shown in FIG. 4 to trigger the first display panel to display the fourth interactive interface including the at least one candidate device control.

In practical application, in this embodiment of the present application, the communicative connection relationship between the primary electrical appliance and the candidate electrical appliance may alternatively be created in another manner. By way of example, in an APP for controlling the primary electrical appliance and the candidate electrical appliance, the user may perform a connection establishment operation on the primary electrical appliance and the candidate electrical appliance (the connection establishment operation interface of the APP is similar to the fourth interactive interface of this embodiment of the present application) to establish a connection between the primary electrical appliance and the candidate electrical appliance.

To better improve the user experience, in this embodiment of the present application, the user needs to establish a connection between the primary electrical appliance and the candidate electrical appliance only once in practical application. By way of example, after the primary electrical appliance and the candidate electrical appliance are powered on for the first time, the user may establish a connection between the primary electrical appliance and the candidate electrical appliance. After the connection is established, as long as the power lines of the primary electrical appliance and the candidate electrical appliance remain plugged in, the primary electrical appliance and the candidate electrical appliance maintain a communicative connection state.

The first interactive interface also displays an interconnection search switch control. After in response to the power-on instruction for the primary electrical appliance, controlling the first display panel to display the first interactive interface, the control method of this embodiment of the present application also includes: in response to detecting a first preset trigger operation by the user on the interconnection search switch control, controlling the primary electrical appliance to enable the function of being searched; and in response to detecting a second preset trigger operation by the user on the interconnection search switch control, controlling the primary electrical appliance to disable the function of being searched.

The first preset trigger operation and the second preset trigger operation may be two different predetermined trigger operations. For example, the first preset trigger operation may be an operation of one tap on the interconnection search switch control, and the second preset trigger operation may be an operation of two taps on the interconnection search switch control.

In this embodiment of the present application, to better improve the user experience, a customized setting function of the search function of the candidate electrical appliance may be available to the user. The user may set, according to actual needs, whether to enable or disable the search function of the candidate electrical appliance.

By way of example, when the user needs to enable the search function of the primary electrical appliance, the user may perform the first preset trigger operation on the interconnection search switch control in the first interactive interface shown in FIG. 3 or FIG. 4; and when the user needs to disable the search function of the primary electrical appliance, the user may perform the second preset trigger operation on the interconnection search switch control in the first interactive interface shown in FIG. 3 or FIG. 4.

In S102, in response to a selection operation by the user on an interconnection function control in the first interactive interface, the secondary electrical appliance interconnected with the primary electrical appliance is acquired, and the first display panel is controlled to display the second interactive interface corresponding to the secondary electrical appliance.

The second interactive interface may display at least one secondary mode control and at least one secondary function control. The secondary mode control is configured to trigger the operating mode of the secondary electrical appliance. The secondary function control is configured to trigger the function sub-mode of the secondary electrical appliance.

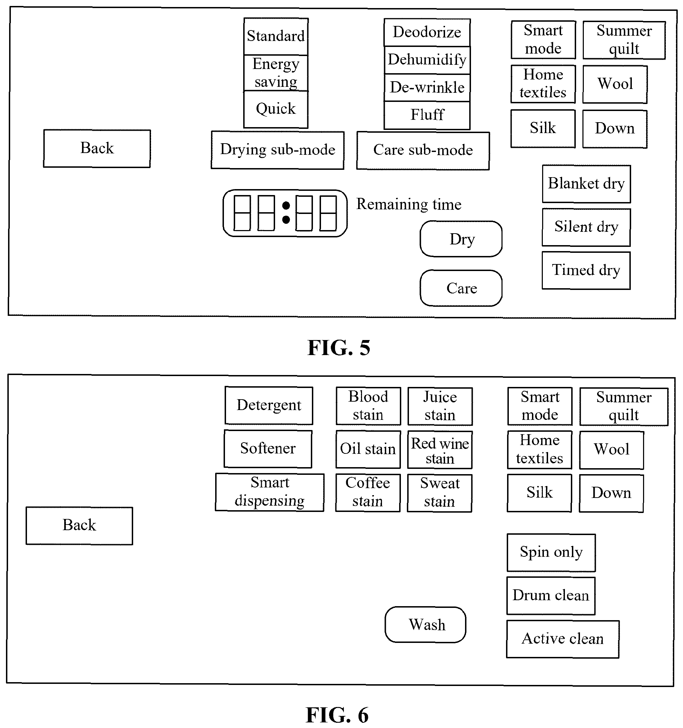

By way of example, in an example in which the primary electrical appliance is a washing machine and the secondary electrical appliance is a dryer, when the user needs to use the drying function/care function of the dryer, but the location of the dryer is inconvenient for user operation, a selection operation may be performed on the interconnection function control shown in FIG. 3. At this time, the first display panel of the washing machine switches from the first interactive interface shown in FIG. 3 to the second interactive interface shown in FIG. 5.

In an example in which the primary electrical appliance is a dryer and the secondary electrical appliance is a washing machine, when the user needs to use the washing function of the washing machine, but the location of the washing machine is inconvenient for user operation, a selection operation may be performed on the interconnection function control shown in FIG. 4. At this time, the first display panel of the dryer switches from the first interactive interface shown in FIG. 4 to the second interactive interface shown in FIG. 6.

In an embodiment, controlling the first display panel to display the second interactive interface corresponding to the secondary electrical appliance includes controlling the first display panel to cancel displaying the first interactive interface and to display the second interactive interface.

By way of example, in an example in which the primary electrical appliance is a washing machine and the secondary electrical appliance is a dryer, after the user performs a selection operation on the interconnection function control shown in FIG. 3, the first display panel stops displaying the first interactive interface shown in FIG. 3 and displays the second interactive interface shown in FIG. 5. As shown in FIG. 5, the second interactive interface stops displaying controls (for example, the interconnection function control and the device add control) related to the interconnected device and displays operation controls (for example, a drying sub-mode control and a care sub-mode control) for the dryer. In addition, as shown in FIG. 5, the second interactive interface may also display a back control. The user may perform a selection operation on the back control to trigger the first display panel to switch back to the first interactive interface shown in FIG. 3. Similarly, in an example in which the primary electrical appliance is a dryer and the secondary electrical appliance is a washing machine, after the user performs a selection operation on the interconnection function control shown in FIG. 4, the first display panel stops displaying the first interactive interface shown in FIG. 4 and displays the second interactive interface shown in FIG. 6.

The first interactive interface includes a main display area and a preset interconnection area. The main display area displays at least one primary mode control and at least one primary function control. Controlling the first display panel to display the second interactive interface corresponding to the secondary electrical appliance includes controlling the first display panel to superimpose the at least one secondary mode control and the at least one secondary function control onto the preset interconnection area of the first interactive interface to display the second interactive interface.

The main display area is configured to display operation controls (including function controls and mode controls) for the primary electrical appliance. The preset interconnection area is configured to display operation controls for the secondary electrical appliance. After the primary electrical appliance is powered on, the first display panel displays only the operation controls for the primary electrical appliance by default. That is, the preset interconnection area in the first interactive interface displays nothing. When the user needs to use the secondary electrical appliance, a selection operation may be performed on the interconnection function control in the main display area to trigger the first display panel to display the operation controls for the secondary electrical appliance in the preset interconnection area.

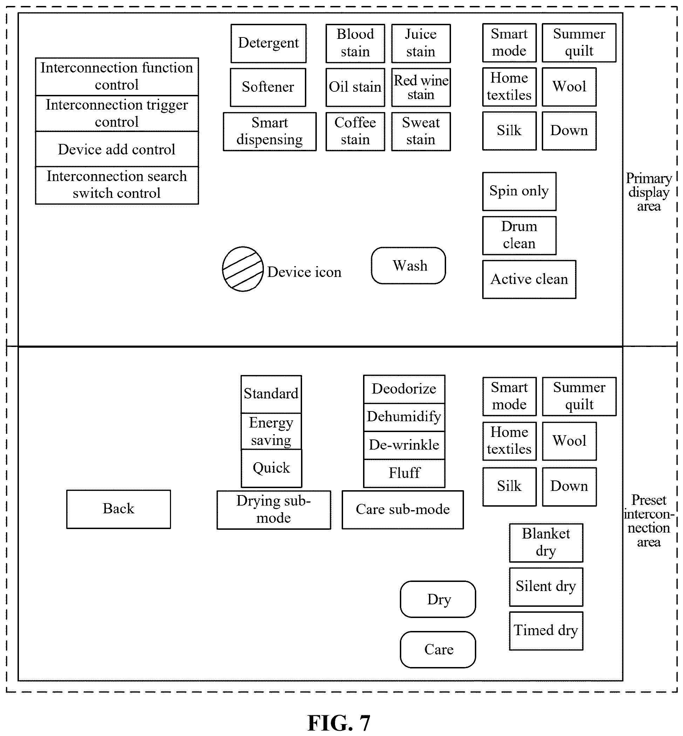

Referring to FIG. 7, in an example in which the primary electrical appliance is a washing machine and the secondary electrical appliance is a dryer, an embodiment of the present application provides a diagram of a second interactive interface. As shown in FIG. 7, the second interactive interface includes a main display area and a preset interconnection area. The main display area displays controls (for example, the interconnection function control and the device add control) related to the interconnected device and the operation controls for the washing machine. The preset interconnection area displays controls including the operation controls for the dryer and the back control. The user may perform a selection operation on the back control in the preset interconnection area to trigger the first display panel to cancel displaying the content in the preset interconnection area.

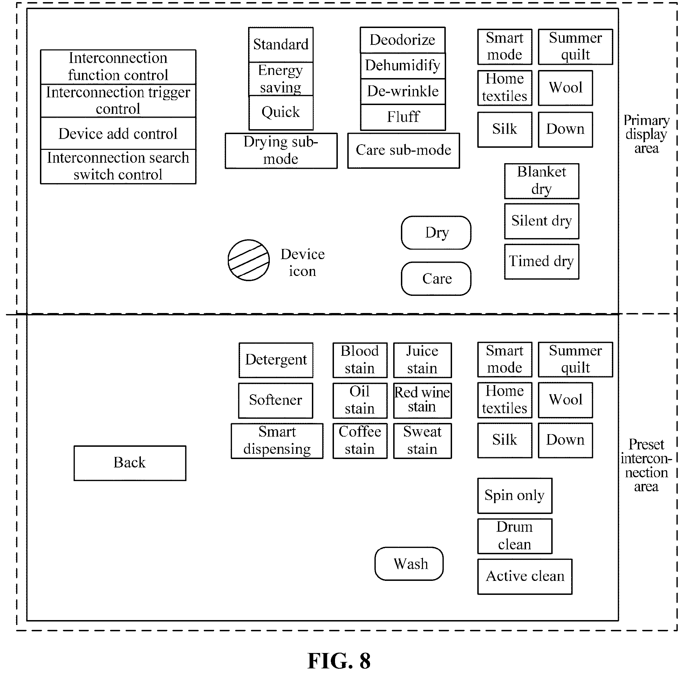

Referring to FIG. 8, in an example in which the primary electrical appliance is a dryer and the secondary electrical appliance is a washing machine, an embodiment of the present application provides a diagram of a second interactive interface. As shown in FIG. 8, the second interactive interface includes a main display area and a preset interconnection area. The main display area displays controls (for example, the interconnection function control and the device add control) related to the interconnected device and the operation controls for the dryer. The preset interconnection area displays controls including the operation controls for the washing machine and the back control. The user may perform a selection operation on the back control in the preset interconnection area to trigger the first display panel to cancel displaying the content in the preset interconnection area.

In this embodiment of the present application, the content displayed on the first display panel of the primary electrical appliance is split so that the first display panel of the primary electrical appliance can display the operation controls for the primary electrical appliance and the operation controls for the secondary electrical appliance simultaneously so that the user can control the starting of the secondary electrical appliance through the operation performed on the primary electrical appliance.

In S103, a target secondary mode control selected by the user from at least one secondary mode control in the second interactive interface and a target secondary function control selected from at least one secondary function control in the second interactive interface are acquired, and the secondary electrical appliance is controlled to start operating according to an operating mode corresponding to the target secondary mode control and a function sub-mode corresponding to the target secondary function control.

In this embodiment of the present application, after the user performs a selection operation on the interconnection function control to trigger the first display panel to display the second interactive interface, the user may select the needed target secondary mode control from the at least one secondary mode control in the second interactive interface and select the needed target secondary function control from the at least one secondary function control in the second interactive interface according to needs. The selection operation by the user on the target secondary function control can trigger the control apparatus to control the secondary electrical appliance to start operating according to the operating mode corresponding to the target secondary mode control and the function sub-mode corresponding to the target secondary function control.

In an embodiment, both the primary electrical appliance and the secondary electrical appliance include a communication module. After detecting the selection operation by the user on the target secondary mode control, the control apparatus may send a control instruction to the secondary electrical appliance through the communication module of the primary electrical appliance to instruct the secondary electrical appliance to start operating according to the operating mode corresponding to the target secondary mode control and the function sub-mode corresponding to the target secondary function control. By way of example, the communication module may be a wireless communication module such as a Bluetooth module, a Zigbee module, a 4G communication module, or a 5G communication module. This is not limited in this embodiment of the present application.

The first interactive interface also displays a start lock control and a linkage lock control. The start lock control is configured to trigger a lock function. The linkage lock control is configured to trigger a one-key linkage function. After acquiring the target secondary mode control selected by the user from the at least one secondary mode control in the second interactive interface and the target secondary function control selected from the at least one secondary function control in the second interactive interface, the control method of this embodiment of the present application also includes determining whether the lock function is triggered and determining whether the one-key linkage function is triggered; and in response to determining that the lock function is not triggered and the one-key linkage function is not triggered, triggering execution of the operation of controlling the secondary electrical appliance to start operating according to the operating mode corresponding to the target secondary mode control and the function sub-mode corresponding to the target secondary function control.

After the lock function is triggered, when the user performs a selection operation on the at least one secondary function control, the secondary electrical appliance does not start operating. After the one-key linkage function is triggered, the primary electrical appliance controls the primary electrical appliance and the secondary electrical appliance to start operating in succession according to a predetermined linkage rule. The one-key linkage function has a higher priority than the lock function.

In this embodiment of the present application, based on the lock function and the one-key linkage function, the user may perform an operation on the first display panel to control the primary electrical appliance and the secondary electrical appliance to start operating in succession automatically. This meets the user's need to use multiple electrical appliances in succession, thereby better improving the user experience.

Before in response to the selection operation by the user on the interconnection function control in the first interactive interface, acquiring the secondary electrical appliance interconnected with the primary electrical appliance and controlling the first display panel to display the second interactive interface corresponding to the secondary electrical appliance, the control method of this embodiment of the present application also includes: in response to a selection operation by the user on the start lock control, triggering the lock function; and acquiring a target primary mode control selected by the user from at least one primary mode control in the first interactive interface and a target primary function control selected from at least one primary function control in the first interactive interface. After acquiring the target secondary mode control selected by the user from the at least one secondary mode control in the second interactive interface and the target secondary function control selected from the at least one secondary function control in the second interactive interface, the control method of this embodiment of the present application also includes: in response to a selection operation by the user on the linkage lock control, triggering the one-key linkage function.

In this embodiment of the present application, the solution of implementing the one-key linkage function by starting the lock control and the linkage lock control may be provided for the user. When the user needs to control the primary electrical appliance and the secondary electrical appliance to start operating in succession automatically, after the primary electrical appliance is powered on, the user may first perform a touch operation on the start lock control to trigger the lock function and then select the target primary mode control, the target secondary mode control, the target primary function control, and the target secondary function control according to needs. Then, the user may perform a touch operation on the linkage lock control to trigger the one-key linkage function to control the primary electrical appliance and the secondary electrical appliance to start operating in succession automatically according to the needed operating mode and the needed function sub-mode.

In an example in which the primary electrical appliance is a pre-linked device and the secondary electrical appliance is a later-linked device, after the one-key linkage function is triggered, the control apparatus may first control the primary electrical appliance to start operating according to the operating mode corresponding to the target primary mode control and the function sub-mode corresponding to the target primary function control; and then in response to determining that the operating parameter of the primary electrical appliance satisfies a linkage switching condition corresponding to the one-key linkage function, control the primary electrical appliance to stop operating and control the secondary electrical appliance to start operating according to the operating mode corresponding to the target secondary mode control and the function sub-mode corresponding to the target secondary function control.

In this embodiment of the present application, the pre-linked device is an electrical appliance that starts operating automatically first, and the later-linked device is an electrical appliance that starts operating automatically later. The linkage switching condition may be a predetermined condition. For example, the linkage switching condition may be that the operating duration reaches a preset duration.

In an embodiment, in response to determining that the operating parameter of the primary electrical appliance satisfies the linkage switching condition corresponding to the first linkage mode control, the target primary function control may also be displayed in a blinking manner to indicate to the user that the current execution device has changed.

While controlling the primary electrical appliance to start operating according to the operating mode corresponding to the target primary mode control and the function sub-mode corresponding to the target primary function control, the control method of this embodiment of the present application may also include controlling the secondary electrical appliance to pre-start according to the linkage rule.

The linkage rule may be a predetermined rule. In an example in which the secondary electrical appliance is a dryer, the linkage rule may be to control the dryer to start preheating.

In an example in which the secondary electrical appliance is a pre-linked device and the primary electrical appliance is a later-linked device, after the one-key linkage function is triggered, the control apparatus may first control the secondary electrical appliance to start operating according to the operating mode corresponding to the target secondary mode control and the function sub-mode corresponding to the target secondary function control; and then in response to determining that the operating parameter of the secondary electrical appliance satisfies a linkage switching condition corresponding to the one-key linkage function, control the secondary electrical appliance to stop operating and control the primary electrical appliance to start operating according to the operating mode corresponding to the target primary mode control and the function sub-mode corresponding to the target primary function control.

In this embodiment of the present application, to better implement linkage between the primary electrical appliance and the secondary electrical appliance, when the pre-linked device starts operating, the later-linked device may be controlled to pre-start operating. In this manner, when the later-linked device starts operating, the later-linked device can quickly enter the optimal operating state.

In addition, in an application scenario of this embodiment of the present application, the primary electrical appliance and the secondary electrical appliance are each provided with a display panel. In this case, the device attribute of the electrical appliance may change. In an example in which the user has a washing machine and a dryer at home, the washing machine and the dryer are each provided with a display panel. The user may use the washing machine as the primary electrical appliance and use the dryer as the secondary electrical appliance. The user may control the washing machine or the dryer by operating on the display panel of the washing machine. In this case, the display panel of the washing machine is the first display panel, and the display panel of the dryer is the second display panel. Alternatively, the user may use the dryer as the primary electrical appliance and use the washing machine as the secondary electrical appliance. The user may control the washing machine or the dryer by operating on the display panel of the dryer. In this case, the display panel of the washing machine is the second display panel, and the display panel of the dryer is the first display panel.

In another application scenario of this embodiment of the present application, only the primary electrical appliance is provided with a display panel. In this case, the device attribute of the electrical appliance is fixed. In an example of a washing machine and a dryer, the manufacturer of the electrical appliances may provide a display panel on only the washing machine, and no display panel is provided on the dryer. In this case, the user can use only the washing machine as the primary electrical appliance and use only the dryer as the secondary electrical appliance and control the washing machine or the dryer by operating on only the display panel of the washing machine.

The secondary electrical appliance includes a second display panel. While controlling the secondary electrical appliance to start operating according to the operating mode corresponding to the target secondary mode control and the function sub-mode corresponding to the target secondary function control, the control method of this embodiment of the present application may also include: controlling the first display panel to display the operating parameter of the secondary electrical appliance and controlling the second display panel to display the displayed content of the first display panel synchronously.

By way of example, the operating parameter may be the remaining operating time of the device. In an example of the second interactive interface shown in FIG. 5, after the secondary electrical appliance, that is, the dryer, starts operating, the second interactive interface may display the remaining operating time of the dryer, and the remaining operating time may be synchronously displayed on the second display panel of the dryer.

According to the preceding description, in the control method of this embodiment of the present application, the first display panel of the primary electrical appliance may display the first interactive interface after the primary electrical appliance is powered on, and an interconnection function control is provided in the first interactive interface. When the user needs to use the secondary electrical appliance, the user may operate the interconnection function control in the first interactive interface to trigger the first display panel to display the second interactive interface corresponding to the secondary electrical appliance. The second interactive interface displays at least one secondary mode control configured to trigger the operating mode of the secondary electrical appliance and at least one secondary function control configured to trigger the function sub-mode of the secondary electrical appliance. The user may select the needed target secondary mode control and the needed target secondary function control in the second interactive interface. In this case, the primary electrical appliance may control the secondary electrical appliance to start operating according to the operating mode corresponding to the target secondary mode control and the function sub-mode corresponding to the target secondary function control. It can be seen that in this embodiment of the present application, the user may operate on the first display panel to switch the operation interface (that is, the first interactive interface of the present application) of the primary electrical appliance to the operation interface (that is, the second interactive interface of the present application) of the secondary electrical appliance so that the user can perform a selection operation on the second interactive interface to control the secondary electrical appliance to start operating according to the operating mode and the function sub-mode needed by the user. In this manner, when an electrical appliance is placed at a location inconvenient for user operation, the user can operate the electrical appliance on another electrical appliance (placed at a location convenient for user operation). Thus, this embodiment of the present application can overcome the inconvenience for the user to operate the electrical appliance placed at an excessively high position, thereby improving the user experience.

Based on the previous embodiments, an embodiment of the present application provides a control method. The control method rearranges the fixed keys on the first display panel of the primary electrical appliance to enable the user to control the secondary electrical appliance to start operating by operating on the primary electrical appliance, thereby overcoming the inconvenience for the user to operate the electrical appliance placed at an excessively high position. Moreover, by improving the display rule of the keys on the first display panel, the user can accurately distinguish the current to-be-controlled execution device so that the user can accurately complete the operation.

The control method of this embodiment of the present application can be executed by the control apparatus of any embodiment of the present application. The control apparatus can be implemented in software and/or hardware and integrated into the control device for executing the control method. The control device may be the primary electrical appliance of this embodiment of the present application or may be a component of the primary electrical appliance, such as the main control board of the primary electrical appliance.

The following describes the control method of this embodiment of the present application in conjunction with drawings.

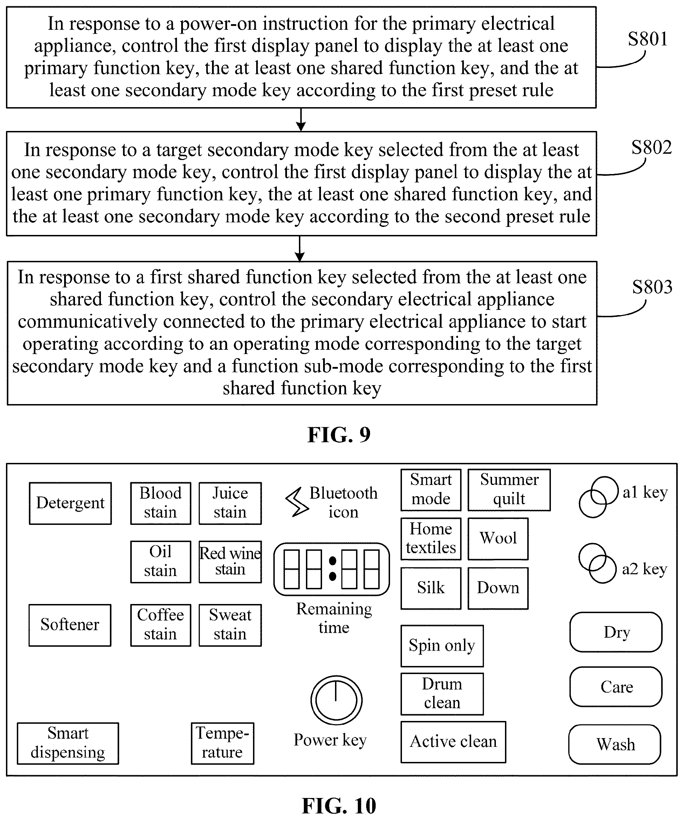

Referring to FIG. 9, the control method of this embodiment of the present application includes S801 to S803.

In S801, in response to a power-on instruction for the primary electrical appliance, the first display panel is controlled to display the at least one primary function key, the at least one shared function key, and the at least one secondary mode key according to the first preset rule.

The control method of this embodiment of the present application can be applied to the primary electrical appliance. The primary electrical appliance may be an electrical appliance placed at a location convenient for user operation. Correspondingly, the secondary electrical appliance of this embodiment of the present application may be an electrical appliance placed at a location inconvenient for user operation. In this embodiment of the present application, the primary electrical appliance and the secondary electrical appliance are the same in terms of some function sub-modes.

In an example, in this embodiment of the present application, the primary electrical appliance may be a washing machine, and the secondary electrical appliance may be a dryer. Alternatively, in practical application, the primary electrical appliance may be a dryer, and the secondary electrical appliance may be a washing machine. The washing machine and the dryer both have function sub-modes corresponding to down, wool, silk, and other clothes materials.

The primary electrical appliance may include a first display panel. The first display panel is fixedly provided with at least one primary function key, at least one shared function key, and at least one secondary mode key. The at least one primary function key is configured to trigger a function sub-mode unique to the primary electrical appliance. The at least one shared function key is configured to trigger a shared function sub-mode of the primary electrical appliance and the secondary electrical appliance. The at least one secondary mode key is configured to trigger an operating mode of the secondary electrical appliance.

Referring to FIG. 10, in an example in which the primary electrical appliance is a washing machine and the secondary electrical appliance is a dryer, an embodiment of the present application provides a diagram of the key layout of a first display panel. As shown in FIG. 10, the at least one primary function key may include function keys unique to the washing machine, such as smart dispensing, softener, detergent, and at least one dispensing mode (for example, the dispensing modes corresponding to "blood stain", "oil stain", "coffee stain", "juice stain", "red wine stain", and "sweat stain" in FIG. 10). By way of example, when the user performs a touch operation on the primary function key of smart dispensing, the control apparatus can lock the smart dispensing function of the washing machine, enabling the washing machine to intelligently dispense softener and detergent. When the user performs a touch operation on both the primary function key of softener and the primary function key of a target dispensing mode among the at least one dispensing mode, the control apparatus can lock the dispensing function of softener corresponding to these two primary function keys. Similarly, when the user performs a touch operation on both the primary function key of detergent and the primary function key of the target dispensing mode among the at least one dispensing mode, the control apparatus can lock the dispensing function of detergent corresponding to these two primary function keys.

By way of example, as shown in FIG. 10, the at least one shared function key of the first display panel may include function keys corresponding to function sub-modes shared by the washing machine and the dryer, such as smart mode, down, home textiles, wool, silk, and summer quilt.

The at least one primary function key on the first display panel of the washing machine may also include function keys corresponding to function sub-modes unique to the washing machine, for example, function keys corresponding to function sub-modes such as spin only, drum clean, and active clean in FIG. 10.

By way of example, as shown in FIG. 10, the at least one secondary mode key on the first display panel of the washing machine may include a mode key corresponding to the operating mode of drying configured to trigger the drying mode of the dryer and a mode key corresponding to the operating mode of care configured to trigger the care mode of the dryer.

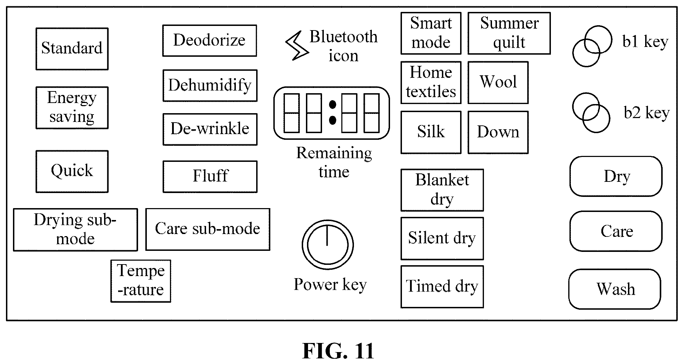

Referring to FIG. 11, in an example in which the primary electrical appliance is a dryer and the secondary electrical appliance is a washing machine, an embodiment of the present application provides a diagram of the key layout of a first display panel. As shown in FIG. 11, the at least one primary function key may include function keys unique to the dryer, such as a drying sub-mode and at least one drying sub-mode option (for example, the drying sub-mode options corresponding to "standard", "energy saving", and "quick" above the "drying sub-mode" in FIG. 11). By way of example, when the user performs a touch operation on both the primary function key of drying sub-mode and the primary function key of a target drying sub-mode option among the at least one drying sub-mode option, the control apparatus can lock the drying sub-mode corresponding to the primary function key of the target drying sub-mode option. Moreover, the at least one primary function key may also include function keys unique to the dryer, such as a care sub-mode and at least one care sub-mode option (for example, the care sub-mode options corresponding to "dehumidify", "de-wrinkle", "deodorize", and "fluff" above the "care sub-mode" in FIG. 11). By way of example, when the user performs a touch operation on both the primary function key of care sub-mode and the primary function key of a target care sub-mode option among the at least one care sub-mode option, the control apparatus can lock the care sub-mode corresponding to the primary function key of the target care sub-mode option.

By way of example, as shown in FIG. 11, the at least one shared function key of the first display panel may include function keys corresponding to function sub-modes shared by the washing machine and the dryer, such as smart mode, down, home textiles, wool, silk, and summer quilt.

The at least one primary function key on the first display panel of the dryer may also include function keys corresponding to function sub-modes unique to the dryer, for example, function keys corresponding to function sub-modes such as blanket dry, silent dry, and timed dry in FIG. 11.

By way of example, as shown in FIG. 11, the at least one secondary mode key on the first display panel of the dryer may include a mode key corresponding to the operating mode of washing configured to trigger the washing mode of the washing machine.

In an embodiment, the power-on instruction may be an instruction triggered by a touch operation by the user on the power key (for example, the power key in FIG. 10 or FIG. 11) of the primary electrical appliance. Upon detecting the power-on instruction for the primary electrical appliance, the control apparatus may control the first display panel to display keys according to the first preset rule.

The first preset rule may be a predetermined display rule for the at least one primary function key, the at least one shared function key, and the at least one secondary mode key.

Controlling the first display panel to display the at least one primary function key, the at least one shared function key, and the at least one secondary mode key according to the first preset rule may include controlling the first display panel to display the at least one primary function key and the at least one shared function key in a first preset display manner and to display the at least one secondary mode key in a second preset display manner.

The first preset display manner and the second preset display manner may be two different predetermined display manners. By way of example, the first preset display manner may be a full-bright display manner, and the second preset display manner may be a dynamically-blinking display manner.

The first preset display manner may be a full-bright display manner. The second preset display manner may be a half-bright display manner. Controlling the first display panel to display the at least one primary function key and the at least one shared function key in the first preset display manner and to display the at least one secondary mode key in the second preset display manner may include controlling the first display panel to display the at least one primary function key and the at least one shared function key and to display the at least one secondary mode key in a half-bright manner. In this manner, the user can accurately distinguish that the to-be-controlled execution device after power-on is the primary electrical appliance.

In this embodiment of the present application, the keys are displayed in two manners: full-bright display and half-bright display. Unless otherwise specified, full-bright display is used by default. The full-bright display manner and the half-bright display manner are different in display parameter. By way of example, in an embodiment, the display brightness in the full-bright display manner is much higher than that in the half-bright display manner.

In this embodiment of the present application, the first display panel is also fixedly provided with at least one primary mode key. While controlling the first display panel to display the at least one primary function key and the at least one shared function key and to display the at least one secondary mode key in the half-bright manner, the control method of this embodiment of the present application may also include controlling the first display panel to display a preset primary mode key among the at least one primary mode key in the full-bright manner and to display a non-preset primary mode key among the at least one primary mode key in the half-bright manner.

The at least one primary mode key is configured to trigger the operating mode of the primary electrical appliance. By way of example, as shown in FIG. 10, the at least one primary mode key on the first display panel of the washing machine may include a mode key corresponding to the operating mode of washing configured to trigger the washing mode of the washing machine. In another example, as shown in FIG. 11, the at least one primary mode key on the first display panel of the dryer may include a mode key corresponding to the operating mode of drying configured to trigger the drying mode of the dryer and a mode key corresponding to the operating mode of care configured to trigger the care mode of the dryer.

The preset primary mode key may be a key predetermined according to the frequency at which the user uses the at least one primary mode key. By way of example, as shown in FIG. 11, the preset primary mode key in the first display panel of the dryer may be a mode key corresponding to the operating mode of drying, and the non-preset primary mode key may be a mode key corresponding to the operating mode of care.

In practical application, in this embodiment of the present application, it is required to maintain the original basic function of the primary electrical appliance (that is, to control the primary electrical appliance to start operating according to the needed operating mode and the needed function sub-mode based on the operation by the user on the first display panel), so the first display panel is fixedly provided with at least one primary mode key. In addition, to better ensure that the user accurately distinguishes that the to-be-controlled execution device after power-on is the primary electrical appliance, while controlling the first display panel to display the at least one primary function key and the at least one shared function key and displaying the at least one secondary mode key in the half-bright manner, the control apparatus may also control the first display panel to display the preset primary mode key among the at least one primary mode key in the full-bright manner and display the non-preset primary mode key among the at least one primary mode key in the half-bright manner.

The first display panel is also fixedly provided with an interconnection trigger key and an interconnection state key. Before controlling the first display panel to display the at least one primary function key, the at least one shared function key, and the at least one secondary mode key according to the first preset rule, the control method of this embodiment of the present application may also include: when the primary electrical appliance and the secondary electrical appliance are both in a power-on state, in response to a preset trigger operation on the interconnection trigger key, creating a communicative connection relationship between the primary electrical appliance and the secondary electrical appliance. While controlling the first display panel to display the at least one primary function key, the at least one shared function key, and the at least one secondary mode key according to the first preset rule, the control method of this embodiment of the present application may also include controlling the first display panel to display the interconnection state key.

The interconnection trigger key is configured to establish a connection between the primary electrical appliance and the secondary electrical appliance. The preset trigger operation may be a predetermined trigger operation.

In an embodiment, the interconnection trigger key may be a key on the primary electrical appliance, for example, a temperature key shown in FIG. 10 or FIG. 11. The preset trigger operation may be a long-press operation performed on the temperature key within a predetermined duration. In another embodiment, the interconnection trigger key may be a newly set key on the primary electrical appliance, and the preset trigger operation may be a touch operation on the newly set key within a predetermined duration.

The interconnection state key is configured to display the connection state between the primary electrical appliance and the secondary electrical appliance. When the interconnection state key is displayed on the first display panel, it is indicated that the primary electrical appliance and the secondary electrical appliance are in a communicative connection state. When the interconnection state key is not displayed on the first display panel, it is indicated that the primary electrical appliance and the secondary electrical appliance are in a disconnection state. By way of example, the interconnection state key may be the Bluetooth icon shown in FIG. 10 or FIG. 11.

In actual application, in this embodiment of the present application, the communicative connection relationship between the primary electrical appliance and the secondary electrical appliance may alternatively be created in another manner. By way of example, in an APP for controlling the primary electrical appliance and the secondary electrical appliance, the user may perform a connection establishment operation on the primary electrical appliance and the secondary electrical appliance to establish a connection between the primary electrical appliance and the secondary electrical appliance.

In addition, in an application scenario of this embodiment of the present application, the primary electrical appliance and the secondary electrical appliance are each provided with a display panel. In this case, the device attribute of the electrical appliance may change. In an example in which the user has a washing machine and a dryer at home, the washing machine and the dryer are each provided with a display panel. The user may use the washing machine as the primary electrical appliance and use the dryer as the secondary electrical appliance. The user may control the washing machine or the dryer by operating on the display panel of the washing machine. In this case, the display panel of the washing machine is the first display panel, and the display panel of the dryer is the second display panel. Alternatively, the user may use the dryer as the primary electrical appliance and use the washing machine as the secondary electrical appliance. The user may control the washing machine or the dryer by operating on the display panel of the dryer. In this case, the display panel of the washing machine is the second display panel, and the display panel of the dryer is the first display panel. In this application scenario, when a connection is established between the primary electrical appliance and the secondary electrical appliance, the user not only needs to perform the preset trigger operation on the interconnection trigger key on the first display interface, but also needs to perform the preset trigger operation on the interconnection trigger key on the second display interface. By way of example, after the user performs a touch operation on the temperature key of FIG. 10, the Bluetooth icon of FIG. 10 starts to blink; and after the user also performs a touch operation on the temperature key of FIG. 11, the washing machine and the dryer are successfully connected, and the Bluetooth icon of FIG. 10 and the Bluetooth icon of FIG. 11 start to be steady on.

In another application scenario of this embodiment of the present application, only the primary electrical appliance is provided with a display panel. In this case, the device attribute of the electrical appliance is fixed. In an example of a washing machine and a dryer, the manufacturer of the electrical appliances may provide a display panel on only the washing machine and provide no display panel on the dryer. In this case, the user can use only the washing machine as the primary electrical appliance and use only the dryer as the secondary electrical appliance and control the washing machine or the dryer by operating on only the display panel of the washing machine.

To better improve the user experience, in this embodiment of the present application, the user needs to establish a connection between the primary electrical appliance and the secondary electrical appliance only once in practical application. By way of example, after the primary electrical appliance and the secondary electrical appliance are powered on for the first time, the user may establish a connection between the primary electrical appliance and the secondary electrical appliance. After the connection is established, as long as the power lines of the primary electrical appliance and the secondary electrical appliance remain plugged in, the primary electrical appliance and the secondary electrical appliance maintain a communicative connection state.

In S802, in response to a target secondary mode key selected from the at least one secondary mode key, the first display panel is controlled to display the at least one primary function key, the at least one shared function key, and the at least one secondary mode key according to the second preset rule.

When the secondary electrical appliance is placed at a location inconvenient for user operation, if the user needs to use the secondary electrical appliance, the user may select a needed target secondary mode key from the at least one secondary mode key and perform a touch operation on the target secondary mode key so that the control apparatus can switch the to-be-controlled execution device to the secondary electrical appliance. To indicate to the user that the secondary electrical appliance serves as the current to-be-controlled execution device, the first display panel may be controlled to display multiple keys according to the second preset rule.

Controlling the first display panel to display the at least one primary function key, the at least one shared function key, and the at least one secondary mode key according to the second preset rule may include controlling the first display panel to display the at least one primary function key in a third preset display manner and to display the target secondary mode key in the first preset display manner.

The third preset display manner may be a predetermined display manner different from both the first preset display manner and the second preset display manner.

The third preset display manner may be canceling display. Controlling the first display panel to display the at least one primary function key in the third preset display manner and to display the target secondary mode key in the first preset display manner may include: controlling the first display panel to cancel displaying the at least one primary function key and to display the target secondary mode key in the full-bright manner.

The primary function key is a function key corresponding to the function sub-mode unique to the primary electrical appliance; therefore, after the to-be-controlled execution device is switched to the secondary electrical appliance, to clearly display the function key corresponding to the currently selectable function sub-mode of the secondary electrical appliance to the user, the display of the at least one primary function key may be cancelled. In addition, to indicate to the user which target secondary mode key is currently selected, the target secondary mode key may be displayed in the full-bright mode, thereby avoiding a misoperation when the user selects the target secondary mode key.

By way of example, in an example of the first display panel shown in FIG. 10, if the user needs to use the dryer to dry clothes, but the dryer is placed at a location inconvenient for user operation, after the washing machine is powered on, the user may perform a touch operation on the mode key corresponding to the operating mode of drying among the at least one secondary mode key of FIG. 10 to lock the drying mode. In this case, the mode key corresponding to the operating mode of drying may be displayed in a full-bright manner. Moreover, to clearly display the function key corresponding to the currently selectable function sub-mode of the dryer to the user, the display of the at least one primary function key may be cancelled.

In S803, in response to a first shared function key selected from the at least one shared function key, the secondary electrical appliance communicatively connected to the primary electrical appliance is controlled to start operating according to an operating mode corresponding to the target secondary mode key and a function sub-mode corresponding to the first shared function key.

In this embodiment of the present application, the function key corresponding to the shared function sub-mode of the primary electrical appliance and the secondary electrical appliance may be provided for the user. After the user switches the to-be-controlled execution device to the secondary electrical appliance by performing a touch operation on the target secondary mode key, the user may select the needed first shared function key from the at least one shared function key according to needs. By performing a touch operation on the first shared function key, the control apparatus can be triggered to control the secondary electrical appliance to start operating according to the operating mode corresponding to the target secondary mode key and the function sub-mode corresponding to the first shared function key.

In an embodiment, both the primary electrical appliance and the secondary electrical appliance include a communication module. After detecting the selection operation by the user on the first shared function key, the control apparatus may send a control instruction to the secondary electrical appliance through the communication module of the primary electrical appliance to instruct the secondary electrical appliance to start operating according to the operating mode corresponding to the first shared function key and the function sub-mode corresponding to the target secondary function key. By way of example, the communication module may be a wireless communication module such as a Bluetooth module, a Zigbee module, a 4G communication module, or a 5G communication module. This is not limited in this embodiment of the present application.

When the secondary electrical appliance includes a second display panel, while controlling the secondary electrical appliance communicatively connected to the primary electrical appliance to start operating according to the operating mode corresponding to the target secondary mode key and the function sub-mode corresponding to the first shared function key, the control method of this embodiment of the present application may also include controlling the first display panel to cancel displaying a non-first shared function key among the at least one shared function key and to display an operating parameter of the primary electrical appliance and controlling the second display panel to display the displayed content of the first display panel synchronously. By way of example, in an example of the first display panel shown in FIG. 10, if the first shared function key selected by the user is the key of smart mode, the first display panel may be controlled to cancel displaying the non-first shared function keys of down, home textiles, wool, silk, and summer quilt and to display the remaining operating time of the washing machine, and the displayed content is synchronized to the second display panel of the dryer.

The first display panel may also be fixedly provided with at least one linkage mode key. When the primary electrical appliance is a pre-linked device, the at least one linkage mode key is associated one-to-one with the at least one secondary mode key. When the primary electrical appliance is a later-linked device, the at least one linkage mode key is associated one-to-one with the at least one primary mode key.

The linkage mode key is configured to trigger the linkage mode. The linkage mode is configured to control the primary electrical appliance and the secondary electrical appliance to start operating in succession. The pre-linked device is an electrical appliance that starts operating automatically first. The later-linked device is an electrical appliance that starts operating automatically later.

When the primary electrical appliance is a pre-linked device, to control the secondary electrical appliance to start operating automatically after controlling the primary electrical appliance to operate, the at least one linkage mode key may be associated one-to-one with the at least one secondary mode key. As shown in FIG. 10, the first display interface of the washing machine includes two linkage mode keys (that is, an a1 key and an a2 key in FIG. 10). The a1 key is associated with the secondary mode key corresponding to the operating mode of drying of FIG. 10. The a2 key is associated with the secondary mode key corresponding to the operating mode of care of FIG. 10.

When the primary electrical appliance is a later-linked device, to control the primary electrical appliance to start operating automatically after controlling the secondary electrical appliance to operate, the at least one linkage mode key may be associated one-to-one with the at least one primary mode key. As shown in FIG. 11, the first display interface of the dryer includes two linkage mode keys (that is, a b1 key and a b2 key in FIG. 11). The b1 key is associated with the primary mode key corresponding to the operating mode of drying of FIG. 11. The b2 key is associated with the primary mode key corresponding to the operating mode of care of FIG. 11.

When the primary electrical appliance is the pre-linked device, after controlling the first display panel to display the at least one primary function key and the at least one shared function key and to display the at least one secondary mode key in the half-bright manner, the control method of this embodiment of the present application may also include in response to a first linkage mode key selected from the at least one linkage mode key, determining a second shared function key selected from the at least one shared function key and a target primary mode key selected from the at least one primary mode key and controlling the primary electrical appliance to start operating according to an operating mode corresponding to the target primary mode key and a function sub-mode corresponding to the second shared function key; and in response to the operating parameter of the primary electrical appliance satisfying a linkage switching condition corresponding to the first linkage mode key, controlling the primary electrical appliance to stop operating and controlling the secondary electrical appliance to start operating according to an operating mode corresponding to a secondary mode key associated with the first linkage mode key and the function sub-mode corresponding to the second shared function key.

The second shared function key may be a key selected by the user before the first linkage mode key is selected or may be a key selected by the user after the first linkage mode key is selected. This is not limited in this embodiment of the present application. The target primary mode key may be a preset primary mode key or may be a mode key reselected by the user.

The operating parameter may be a parameter such as operating time. The linkage switching condition may be a predetermined condition. For example, the linkage switching condition may be that the operating time reaches a preset time.

In an example in which the primary electrical appliance is a washing machine, the secondary electrical appliance is a dryer, and the display panel of the washing machine is the first display panel shown in FIG. 10, when the user needs to wash and dry clothes made of down, after the user performs a touch operation on the power key of FIG. 10, the user may perform a touch operation on the a1 key among the at least one linkage mode key and perform a touch operation on the second shared function key corresponding to the function sub-mode of down among the at least one shared function key to make the control apparatus to control the washing machine to start operating according to the washing mode corresponding to the target primary mode key of washing and the function sub-mode of down and then, when the operating time of the washing machine satisfies the linkage switching condition corresponding to the a1 key, may control the washing machine to stop operating and control the dryer to start operating according to the drying mode associated with the a1 key and the function sub-mode of down.

In this embodiment of the present application, in response to determining that the operating parameter of the primary electrical appliance satisfies the linkage switching condition corresponding to the first linkage mode key, the second shared function key may also be displayed in a blinking manner to indicate to the user that the current execution device has changed.

When the primary electrical appliance is the pre-linked device, while controlling the first display panel to display the at least one primary function key and the at least one shared function key and to display the at least one secondary mode key in the half-bright manner, the control method of this embodiment of the present application may also include controlling the first display panel to display the at least one linkage mode key in the half-bright manner. In this manner, the user can be indicated that the current electrical appliance is a pre-linked device, and each linkage mode key is in a selectable state. In addition, while controlling the primary electrical appliance to start operating according to the operating mode corresponding to the target primary mode key and the function sub-mode corresponding to the second shared function key, the control method of this embodiment of the present application may also include controlling the first display panel to display the first linkage mode key in the full-bright manner and cancel displaying a non-first linkage mode key among the at least one linkage mode key. In this manner, the user can be indicated that the currently selected linkage mode is a mode corresponding to the first linkage mode key, and the non-first linkage mode key is in a non-selectable state.

While controlling the primary electrical appliance to start operating according to the operating mode corresponding to the target primary mode key and the function sub-mode corresponding to the second shared function key, the control method of this embodiment of the present application may also include controlling the secondary electrical appliance to pre-start according to a linkage rule corresponding to the first linkage mode key.

The linkage rule may be a predetermined rule. In an example in which the secondary electrical appliance is a dryer, the linkage rule may be to control the dryer to start preheating.

In this embodiment of the present application, to better implement linkage between the primary electrical appliance and the secondary electrical appliance, when the pre-linked device starts operating, the later-linked device may be controlled to pre-start operating. In this manner, when the later-linked device starts operating, the later-linked device can quickly enter the optimal operating state.

When the primary electrical appliance is the pre-linked device, while controlling the first display panel to cancel displaying the at least one primary function key and to display the target secondary mode key in the full-bright manner, the control method of this embodiment of the present application may also include controlling the first display panel to cancel displaying the at least one linkage mode key.

When the primary electrical appliance is the later-linked device, after controlling the first display panel to cancel displaying the at least one primary function key and to display the target secondary mode key in the full-bright manner, the control method of this embodiment of the present application may also include in response to a second linkage mode key selected from the at least one linkage mode key, determining a third shared function key selected from the at least one shared function key and controlling the secondary electrical appliance to start operating according to the operating mode corresponding to the target secondary mode key and a function sub-mode corresponding to the third shared function key; and in response to the operating parameter of the secondary electrical appliance satisfying a linkage switching condition corresponding to the second linkage mode key, controlling the secondary electrical appliance to stop operating and controlling the primary electrical appliance to start operating according to an operating mode corresponding to a primary mode key associated with the second linkage mode key and the function sub-mode corresponding to the third shared function key.

The third shared function key may be a key selected by the user before the second linkage mode key is selected or may be a key selected by the user after the second linkage mode key is selected. This is not limited in this embodiment of the present application.

In an example in which the primary electrical appliance is a dryer, the secondary electrical appliance is a washing machine, and the display panel of the dryer is the first display panel shown in FIG. 11, when the user needs to wash and dry clothes made of down, after the user performs a touch operation on the power key of FIG. 11, the user may perform a touch operation on the washing mode among the at least one secondary mode key to switch the current to-be-controlled execution device to the washing machine, perform a touch operation on the b1 key, and perform a touch operation on the third shared function key corresponding to the function sub-mode of down to make the control apparatus to control the washing machine to start operating according to the washing mode corresponding to the target secondary mode key of washing and the function sub-mode of down and then, when the operating time of the washing machine satisfies the linkage switching condition corresponding to the b1 key, may control the washing machine to stop operating and control the dryer to start operating according to the drying mode associated with the b1 key and the function sub-mode of down.

In this embodiment of the present application, in response to determining that the operating parameter of the secondary electrical appliance satisfies the linkage switching condition corresponding to the second linkage mode key, the third shared function key may also be displayed in a blinking manner to indicate to the user that the current execution device has changed.

When the primary electrical appliance is the later-linked device, while controlling the first display panel to display the at least one primary function key and the at least one shared function key and to display the at least one secondary mode key in the half-bright manner, the control method of this embodiment of the present application may also include controlling the first display panel not to display the at least one linkage mode key. In this manner, the user can be indicated that the current electrical appliance is a later-linked device, and each linkage mode key is in a non-selectable state. Moreover, while controlling the first display panel to cancel displaying the at least one primary function key and to display the target secondary mode key in the full-bright manner, the control method of this embodiment of the present application may also include controlling the first display panel to display the at least one linkage mode key in the half-bright manner. In this manner, the user can be indicated that the current to-be-controlled execution device has changed to a pre-linked device, and each linkage mode key is in a selectable state. In addition, while controlling the secondary electrical appliance to start operating according to the operating mode corresponding to the target secondary mode key and the function sub-mode corresponding to the third shared function key, the control method of this embodiment of the present application may also include controlling the first display panel to display the second linkage mode key in the full-bright manner and cancel displaying the non-second linkage mode key. In this manner, the user can be indicated that the currently selected linkage mode is a mode corresponding to the second linkage mode key, and the non-second linkage mode key is in a non-selectable state.

Similarly, while controlling the secondary electrical appliance to start operating according to the operating mode corresponding to the target secondary mode key and the function sub-mode corresponding to the third shared function key, the control method of this embodiment of the present application may also include controlling the primary electrical appliance to pre-start according to a linkage rule corresponding to the second linkage mode key.

In summary, in the control method of this embodiment of the present application, the first display panel of the primary electrical appliance may be fixedly provided with at least one primary function key, at least one shared function key, and at least one secondary mode key. The at least one primary function key is configured to trigger a function sub-mode unique to the primary electrical appliance. The at least one shared function key is configured to trigger a shared function sub-mode of the primary electrical appliance and the secondary electrical appliance. The at least one secondary mode key is configured to trigger an operating mode of the secondary electrical appliance. When the user needs to use the secondary electrical appliance, the user may select the needed target secondary mode key from the at least one secondary mode key and then select a needed first shared function key from the at least one shared function key so that the primary electrical appliance can control the secondary electrical appliance to start operating according to the operating mode corresponding to the target secondary mode key and the function sub-mode corresponding to the first shared function key. It can be seen that in this embodiment of the present application, the fixed keys on the first display panel of the primary electrical appliance are re-arranged so that the user can control the secondary electrical appliance to start operating according to the needed operating mode and the needed function sub-mode based on the user operation on the first display panel. In this manner, when an electrical appliance is placed at a location inconvenient for user operation, the user can operate the electrical appliance on another electrical appliance (placed at a location convenient for user operation). Thus, this embodiment of the present application can overcome the inconvenience for the user to operate the electrical appliance placed at an excessively high position, thereby improving the user experience.

In addition, in the control method of this embodiment of the present application, while the user can control the secondary electrical appliance to start operating according to the needed operating mode and the needed function sub-mode based on the user operation on the first display panel, the user also needs to maintain the original basic functions of the primary electrical appliance (that is, the user can control the primary electrical appliance to start operating according to the needed operating mode and the needed function sub-mode based on the user operation on the first display panel). In this case, the user may fail to accurately distinguish the current to-be-controlled execution device. Based on this, in this embodiment of the present application, upon acquiring the power-on instruction for the primary electrical appliance, the primary electrical appliance may first control the first display panel to display the at least one primary function key, the at least one shared function key, and the at least one secondary mode key according to the first preset rule to indicate to the user that the current to-be-controlled execution device is the primary electrical appliance. Then, upon acquiring the target secondary mode key selected by the user, the primary electrical appliance may control the first display panel to display the at least one primary function key, the at least one shared function key, and the at least one secondary mode key according to the second preset rule to indicate to the user that the current to-be-controlled execution device is switched to the secondary electrical appliance. It can be seen that in the present application, by improving the display rule of the keys on the first display panel, the user can accurately distinguish the current to-be-controlled execution device so that the user can accurately complete the operation, thereby better improving the user experience.

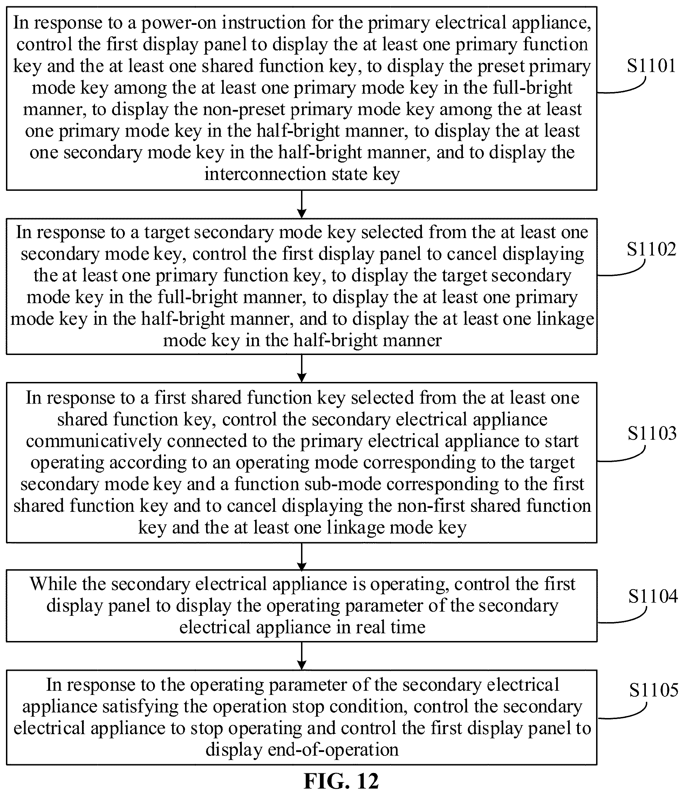

As shown in FIG. 12, an embodiment of the present application provides a control method. The method includes S1101 to S1105.

In S1101, in response to a power-on instruction for the primary electrical appliance, the first display panel is controlled to display the at least one primary function key and the at least one shared function key, to display the preset primary mode key among the at least one primary mode key in the full-bright manner, to display the non-preset primary mode key among the at least one primary mode key in the half-bright manner, to display the at least one secondary mode key in the half-bright manner, and to display the interconnection state key.

In S1102, in response to a target secondary mode key selected from the at least one secondary mode key, the first display panel is controlled to cancel displaying the at least one primary function key, to display the target secondary mode key in the full-bright manner, to display the at least one primary mode key in the half-bright manner, and to display the at least one linkage mode key in the half-bright manner.

In S1103, in response to a first shared function key selected from the at least one shared function key, the secondary electrical appliance communicatively connected to the primary electrical appliance is controlled to start operating according to an operating mode corresponding to the target secondary mode key and a function sub-mode corresponding to the first shared function key and to cancel displaying the non-first shared function key and the at least one linkage mode key.

In S1104, while the secondary electrical appliance is operating, the first display panel is controlled to display the operating parameter of the secondary electrical appliance in real time.

In S1105, in response to the operating parameter of the secondary electrical appliance satisfying the operation stop condition, the secondary electrical appliance is controlled to stop operating, and the first display panel is controlled to display end-of-operation.

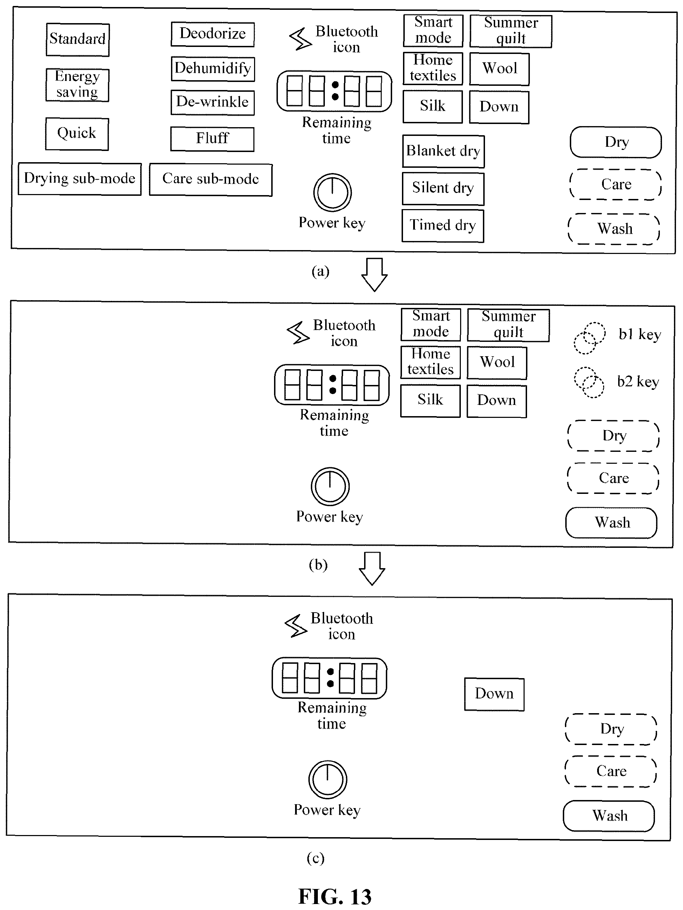

Referring to FIG. 13, in an example in which the primary electrical appliance is a dryer and the secondary electrical appliance is a washing machine, this embodiment of the present application provides a diagram illustrating a display process of a first display panel. The first display panel may be the display panel shown in FIG. 11. The diagram illustrating the display process may be applied to the control method shown in FIG. 12. By way of example, when the user needs to wash clothes made of down, the user may first perform a touch operation on the power key of the first display panel to control the first display panel to display the interface shown in FIG. 13A. Then, the user may perform a touch operation on the mode key corresponding to the operating mode of washing among the at least one secondary mode key to control the first display panel to display the interface shown in FIG. 13B. Then, the user may perform a touch operation on the shared function key corresponding to the function sub-mode of down among the at least one shared function key to control the first display panel to display the interface shown in FIG. 13C. While the washing machine is operating, the first display panel displays the remaining operating time of the washing machine in real time. When the remaining operating time of the washing machine satisfies the operation stop condition, the remaining time shown in FIG. 13C may be displayed as "0END", indicating that the washing machine stops operating.

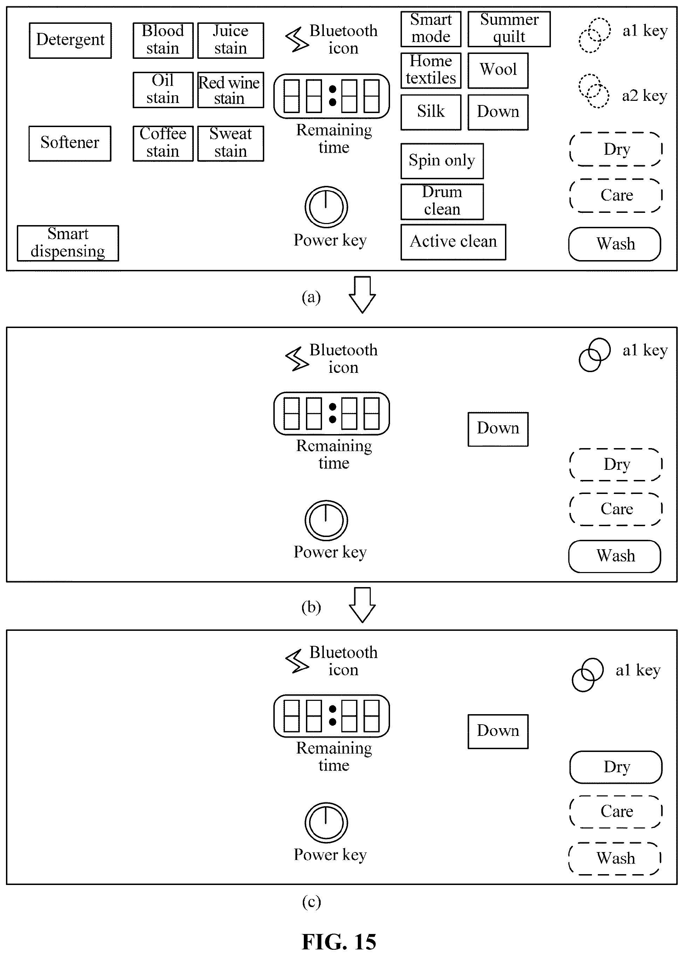

In the drawings (for example, FIG. 13 and FIG. 15) of this embodiment of the present application, a key within a dashed border is displayed in the half-bright manner, and a key within a solid border is displayed in the full-bright manner.

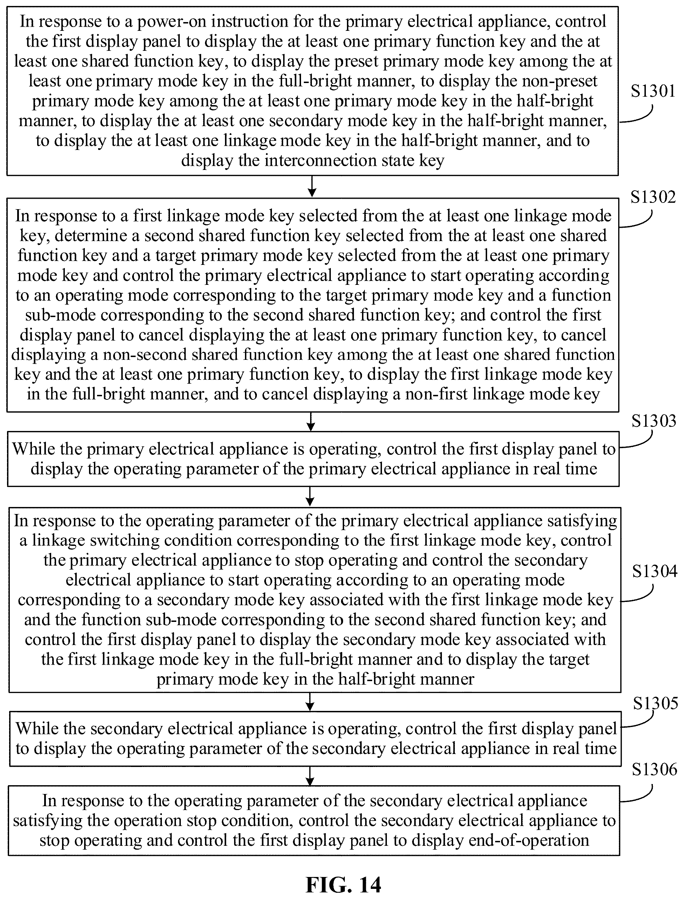

As shown in FIG. 14, in an example in which the primary electrical appliance is a pre-linked device, an embodiment of the present application provides a control method. The control method includes S1301 to S1306.

In S1301, in response to a power-on instruction for the primary electrical appliance, the first display panel is controlled to display the at least one primary function key and the at least one shared function key, to display the preset primary mode key among the at least one primary mode key in the full-bright manner, to display the non-preset primary mode key among the at least one primary mode key in the half-bright manner, to display the at least one secondary mode key in the half-bright manner, to display the at least one linkage mode key in the half-bright manner, and to display the interconnection state key.

In S1302, in response to a first linkage mode key selected from the at least one linkage mode key, a second shared function key selected from the at least one shared function key and a target primary mode key selected from the at least one primary mode key are determined, and the primary electrical appliance is controlled to start operating according to an operating mode corresponding to the target primary mode key and a function sub-mode corresponding to the second shared function key; and the first display panel is controlled to cancel displaying the at least one primary function key, to cancel displaying a non-second shared function key among the at least one shared function key and the at least one primary function key, to display the first linkage mode key in the full-bright manner, and to cancel displaying a non-first linkage mode key.

In S1303, while the primary electrical appliance is operating, the first display panel is controlled to display the operating parameter of the primary electrical appliance in real time.

In S1304, in response to the operating parameter of the primary electrical appliance satisfying a linkage switching condition corresponding to the first linkage mode key, the primary electrical appliance is controlled to stop operating, and the secondary electrical appliance is controlled to start operating according to an operating mode corresponding to a secondary mode key associated with the first linkage mode key and the function sub-mode corresponding to the second shared function key; and the first display panel is controlled to display the secondary mode key associated with the first linkage mode key in the full-bright manner and to display the target primary mode key in the half-bright manner.

In S1305, while the secondary electrical appliance is operating, the first display panel is controlled to display the operating parameter of the secondary electrical appliance in real time.

In S1306, in response to the operating parameter of the secondary electrical appliance satisfying the operation stop condition, the secondary electrical appliance is controlled to stop operating, and the first display panel is controlled to display end-of-operation.

Referring to FIG. 15, in an example in which the primary electrical appliance is a washing machine and the secondary electrical appliance is a dryer, this embodiment of the present application provides a diagram illustrating a display process of a first display panel. The first display panel may be the display panel shown in FIG. 10. The diagram illustrating the display process may be applied to the control method shown in FIG. 14. By way of example, when the user needs to wash and dry clothes made of down, the user may first perform a touch operation on the power key of the first display panel to control the first display panel to display the interface shown in FIG. 15A. Then, the user may perform a touch operation on the a1 key among the at least one linkage mode key and may perform a touch operation on the shared function key corresponding to the function sub-mode of down among the at least one shared function key to control the first display panel to display the interface shown in FIG. 15B. While the washing machine is operating, the first display panel displays the remaining operating time of the washing machine in real time. When the remaining operating time of the washing machine satisfies the linkage switching condition corresponding to the a1 key, the first display panel displays the interface shown in FIG. 15C. Then, the dryer starts operating. While the dryer is operating, the first display panel displays the remaining operating time of the dryer in real time. When the remaining operating time of the dryer satisfies the operation stop condition, the remaining operating time shown in FIG. 15C may be displayed as "0END", indicating that the dryer stops operating.

Based on the previous embodiments, an embodiment of the present application provides a control method. In the control method, the physical keys and the display screen are combined on the first display panel of the primary electrical appliance to enable the user to control the secondary electrical appliance to start operating by operating on the primary electrical appliance, thereby overcoming the inconvenience for the user to operate the electrical appliance placed at an excessively high position.

The control method of this embodiment of the present application can be executed by the control apparatus of any embodiment of the present application. The control apparatus can be implemented in software and/or hardware and integrated into the control device for executing the control method. The control device may be the primary electrical appliance of this embodiment of the present application or may be a component of the primary electrical appliance, such as the main control board of the primary electrical appliance.

The following describes the control method of this embodiment of the present application in conjunction with drawings.

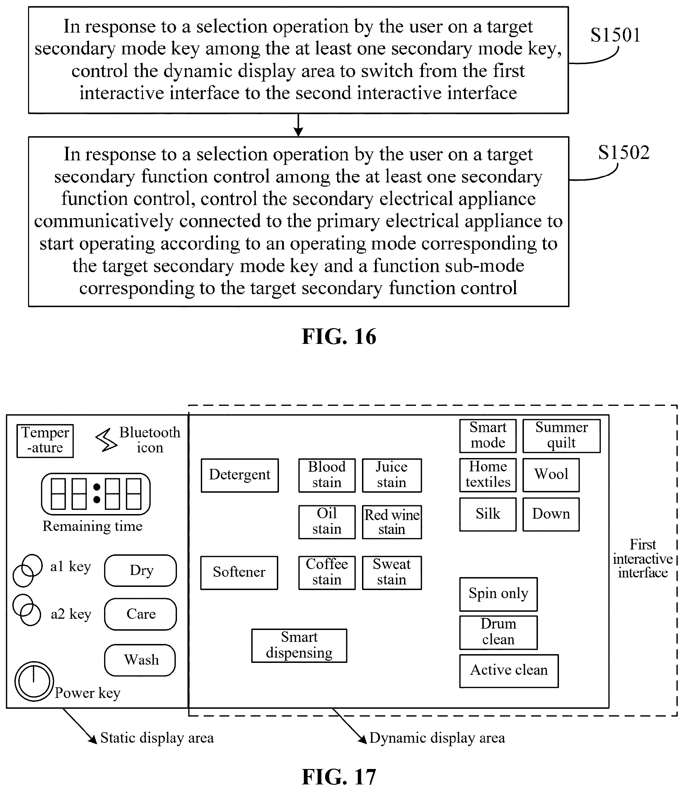

Referring to FIG. 16, the control method of this embodiment of the present application includes S1501 and S1502.

In S1501, in response to a selection operation by the user on a target secondary mode key among the at least one secondary mode key, the dynamic display area is controlled to switch from the first interactive interface to the second interactive interface.

The control method of this embodiment of the present application can be applied to the primary electrical appliance. The primary electrical appliance may be an electrical appliance placed at a location convenient for user operation. Correspondingly, the secondary electrical appliance of this embodiment of the present application may be an electrical appliance placed at a location inconvenient for user operation. In an example, in this embodiment of the present application, the primary electrical appliance may be a washing machine, and the secondary electrical appliance may be a dryer. Alternatively, in practical application, the primary electrical appliance may be a dryer, and the secondary electrical appliance may be a washing machine.

The primary electrical appliance may include a first display panel. The first display panel may include a static display area and a dynamic display area. The static display area may be fixedly provided with multiple physical keys. The dynamic display area may be a display screen configured to display an interactive interface. For example, the dynamic display area may be a TFT display screen. The physical keys on the static display area may include at least one primary mode key and at least one secondary mode key. The primary mode key is configured to trigger the operating mode of the primary electrical appliance. The secondary mode key is configured to trigger the operating mode of the secondary electrical appliance.

The first interactive interface displays at least one primary function control. The primary mode control is configured to trigger the function sub-mode of the primary electrical appliance. The second interactive interface displays at least one secondary function control. The primary function control is configured to trigger the function sub-mode of the secondary electrical appliance.

The first interactive interface may be default displayed content of the dynamic display area after the primary electrical appliance is powered on. In an embodiment, before in response to the selection operation by the user on the target secondary mode key among the at least one secondary mode key, controlling the dynamic display area to switch from the first interactive interface to the second interactive interface, the control method of this embodiment of the present application may also include: in response to the power-on instruction for the primary electrical appliance, controlling the dynamic display area to display the first interactive interface and controlling the static display area to display the at least one secondary mode key and the at least one primary mode key according to a preset rule. By way of example, the preset rule may be to display a preset primary mode key among the at least one primary mode key in the full-bright manner and to display the at least one secondary mode key and a non-preset primary mode key among the at least one primary mode key in the half-bright manner. The display parameter of the full-bright display manner is different from the display parameter of the half-bright display manner. For example, the display brightness of the full-bright display manner is much higher than the display brightness of the half-bright display manner.

The preset primary mode key may be a key predetermined according to the frequency at which the user uses each primary mode key. In an example in which the primary electrical appliance is a dryer, the preset primary mode key may be a mode key corresponding to the operating mode of drying, and the non-preset primary mode key may be a mode key corresponding to the operating mode of care.

In an embodiment, the power-on instruction may be an instruction triggered by a touch operation by the user on the power key (for example, the power key in FIG. 17) of the primary electrical appliance.

Referring to FIG. 17, in an example in which the primary electrical appliance is a washing machine and the secondary electrical appliance is a dryer, an embodiment of the present application provides a diagram illustrating a layout of a first display panel. As shown in FIG. 17, the first display panel includes a dynamic display area and a static display area. The at least one primary mode key in the static display area may include a mode key corresponding to the operating mode of washing configured to trigger the washing mode of the washing machine. The at least one secondary mode key in the static display area may include a mode key corresponding to the operating mode of drying configured to trigger the drying mode of the dryer and a mode key corresponding to the operating mode of care configured to trigger the care mode of the dryer. After the washing machine is powered on, the dynamic display area displays the first interactive interface shown in FIG. 17 by default. As shown in FIG. 17, the at least one primary function control in the first interactive interface may include function controls unique to the washing machine, such as smart dispensing, softener, detergent, and at least one dispensing mode (for example, the dispensing modes corresponding to "blood stain", "oil stain", "coffee stain", "juice stain", "red wine stain", and "sweat stain" in FIG. 17). By way of example, when the user performs a touch operation on the primary function control of smart dispensing, the control apparatus can lock the smart dispensing function of the washing machine, enabling the washing machine to intelligently dispense softener and detergent. When the user performs a touch operation on both the primary function control of softener and the primary function control of a target dispensing mode among the at least one dispensing mode, the control apparatus can lock the dispensing function of softener corresponding to these two primary function controls. Similarly, when the user performs a touch operation on both the primary function control of detergent and the primary function control of the target dispensing mode among the at least one dispensing mode, the control apparatus can lock the dispensing function of detergent corresponding to these two primary function controls. In addition, the at least one primary function control in the first interactive interface may also include function keys corresponding to function sub-modes unique to the washing machine, such as spin only, drum clean, and active clean. In addition, as shown in FIG. 17, the at least one primary function control in the first interactive interface may also include function controls shared by the washing machine and the dryer, such as smart mode, down, home textiles, wool, silk, and summer quilt.

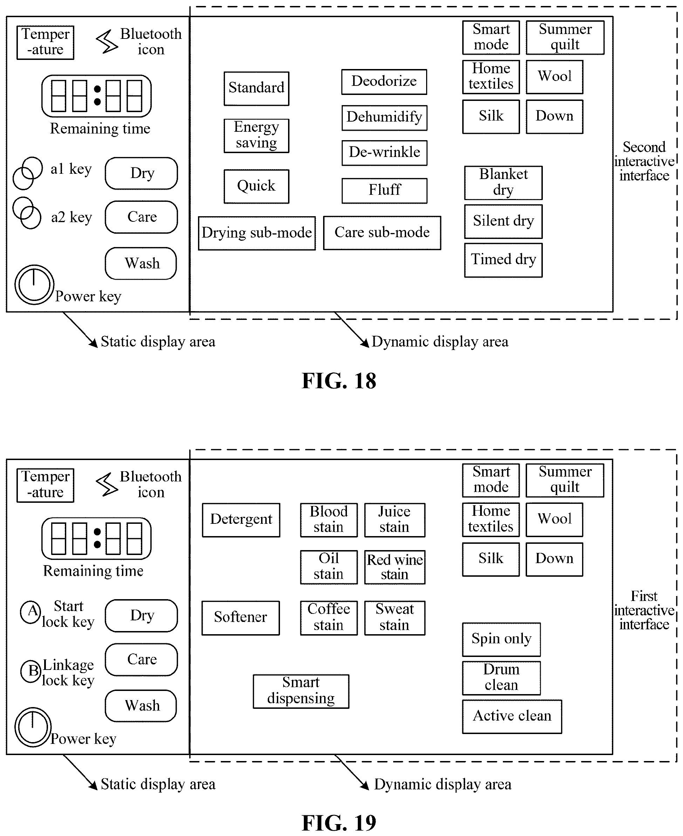

In an example of the first display panel of the washing machine shown in FIG. 17, when the user needs to use the drying function/care function of the dryer, but the location of the dryer is inconvenient for user operation, a selection operation may be performed on the target secondary mode key corresponding to the drying/care mode in the static display area shown in FIG. 17. At this time, the dynamic display area switches from the first interactive interface in the first display panel shown in FIG. 17 to the second interactive interface in the first display panel shown in FIG. 18. As shown in FIG. 18, the at least one secondary function control in the second interactive interface may include function keys unique to the dryer, such as a drying sub-mode and at least one drying sub-mode option (for example, the drying sub-mode options corresponding to "standard", "energy saving", and "quick" above the "drying sub-mode" in FIG. 18). By way of example, when the user performs a touch operation on both the secondary function control of drying sub-mode and the secondary function control of a target drying sub-mode option among the at least one drying sub-mode option, the control apparatus can lock the drying sub-mode corresponding to the secondary function control of the target drying sub-mode option. Moreover, the at least one secondary function control may also include function controls unique to the dryer, such as a care sub-mode and at least one care sub-mode option (for example, the care sub-mode options corresponding to "dehumidify", "de-wrinkle", "deodorize", and "fluff" above the "care sub-mode" in FIG. 18). By way of example, when the user performs a touch operation on both the secondary function control of care sub-mode and the secondary function control of a target care sub-mode option among the at least one care sub-mode option, the control apparatus can lock the care sub-mode corresponding to the secondary function control of the target care sub-mode option. In addition, the at least one secondary function control in the second interactive interface may also include function keys corresponding to function sub-modes unique to the dryer, such as blanket dry, silent dry, and timed dry. In addition, as shown in FIG. 18, the at least one secondary function control in the second interactive interface may also include function controls shared by the washing machine and the dryer, such as smart mode, down, home textiles, wool, silk, and summer quilt.

The static display area is also fixedly provided with an interconnection trigger key and an interconnection state key. Before in response to the selection operation by the user on the target secondary mode key among the at least one secondary mode key, the control method of this embodiment of the present application may also include: when the primary electrical appliance and the secondary electrical appliance are both in a power-on state, in response to a preset trigger operation by the user on the interconnection trigger key, creating a communicative connection relationship between the primary electrical appliance and the secondary electrical appliance; and controlling the at least one secondary mode key in the static display area to switch from a first display state to a second display state and controlling the interconnection state key in the static display area to switch from the first display state to a third display state.

The interconnection trigger key is configured to establish a connection between the primary electrical appliance and the secondary electrical appliance. The preset trigger operation may be a predetermined trigger operation. By way of example, the first display state may be non-display, the second display state may be half-bright display, and the third display state may be full-bright display.

In an embodiment, the interconnection trigger key may be another function key (for example, a temperature key) on the primary electrical appliance. In this embodiment of the present application, another function key on the primary electrical appliance may be arranged in the static display area. By way of example, the interconnection trigger key may be a temperature key shown in FIG. 17 or FIG. 18, and the preset trigger operation may be a long-press operation performed on the temperature key within a predetermined time. In another embodiment, the interconnection trigger key may be a newly set key on the primary electrical appliance, and the preset trigger operation may be a touch operation on the newly set key within a predetermined time.

The interconnection state key is configured to display the connection state between the primary electrical appliance and the secondary electrical appliance. When the interconnection state key is displayed in the static display area, it is indicated that the primary electrical appliance and the secondary electrical appliance are in a communicative connection state. When the interconnection state key is not displayed on the first display panel, it is indicated that the primary electrical appliance and the secondary electrical appliance are in a disconnection state. By way of example, the interconnection state key may be the Bluetooth icon shown in FIG. 17 or FIG. 18.

In actual application, in this embodiment of the present application, the communicative connection relationship between the primary electrical appliance and the secondary electrical appliance may alternatively be created in another manner. By way of example, in an APP for controlling the primary electrical appliance and the secondary electrical appliance, the user may perform a connection establishment operation on the primary electrical appliance and the secondary electrical appliance to establish a connection between the primary electrical appliance and the secondary electrical appliance.

In an application scenario of this embodiment of the present application, the primary electrical appliance and the secondary electrical appliance are each provided with a display panel. Moreover, the primary electrical appliance and the secondary electrical appliance are the same in the layout of the display panel (except that during operation, the primary mode keys and the secondary mode keys are swapped between the primary electrical appliance and the secondary electrical appliance, and the primary function controls and the secondary function controls are swapped the primary electrical appliance and the secondary electrical appliance). In this case, the device attribute of the electrical appliance may change. In an example in which the user has a washing machine and a dryer at home, the washing machine and the dryer are each provided with a display panel. The user may use the washing machine as the primary electrical appliance and use the dryer as the secondary electrical appliance. The user may control the washing machine or the dryer by operating on the display panel of the washing machine. In this case, the display panel of the washing machine is the first display panel, and the display panel of the dryer is the second display panel. Alternatively, the user may use the dryer as the primary electrical appliance and use the washing machine as the secondary electrical appliance. The user may control the washing machine or the dryer by operating on the display panel of the dryer. In this case, the display panel of the washing machine is the second display panel, and the display panel of the dryer is the first display panel. In this application scenario, when a connection is established between the primary electrical appliance and the secondary electrical appliance, the user not only needs to perform the preset trigger operation on the interconnection trigger key on the first display interface, but also needs to perform the preset trigger operation on the interconnection trigger key on the second display interface. By way of example, after the user performs a touch operation on the temperature key in the first display interface, the Bluetooth icon in the first display interface starts to blink; and after the user also performs a touch operation on the temperature key in the second display interface, the washing machine and the dryer are successfully connected, and the Bluetooth icon in the first display interface and the Bluetooth icon in the second display interface start to be steady on.

In another application scenario of this embodiment of the present application, only the primary electrical appliance is provided with a display panel. In this case, the device attribute of the electrical appliance is fixed. In an example of a washing machine and a dryer, the manufacturer of the electrical appliances may provide a display panel on only the washing machine and provide no display panel on the dryer. In this case, the user can use only the washing machine as the primary electrical appliance and use only the dryer as the secondary electrical appliance and control the washing machine or the dryer by operating on only the display panel of the washing machine.

To better improve the user experience, in this embodiment of the present application, the user needs to establish a connection between the primary electrical appliance and the secondary electrical appliance only once in practical application. By way of example, after the primary electrical appliance and the secondary electrical appliance are powered on for the first time, the user may establish a connection between the primary electrical appliance and the secondary electrical appliance. After the connection is established, as long as the power lines of the primary electrical appliance and the secondary electrical appliance remain plugged in, the primary electrical appliance and the secondary electrical appliance maintain a communicative connection state.

In S1502, in response to a selection operation by the user on a target secondary function control among the at least one secondary function control, the secondary electrical appliance communicatively connected to the primary electrical appliance is controlled to start operating according to an operating mode corresponding to the target secondary mode key and a function sub-mode corresponding to the target secondary function control.

In this embodiment of the present application, after the user performs a selection operation on the target secondary mode key to switch the current to-be-controlled execution device to the secondary electrical appliance and switch the dynamic display area from the first interactive interface to the second interactive interface, the user may select the needed target secondary function control from the at least one secondary function control according to needs. The selection operation by the user on the target secondary function control can trigger the control apparatus to control the secondary electrical appliance to start operating according to the operating mode corresponding to the target secondary mode key and the function sub-mode corresponding to the target secondary function control.

In an embodiment, both the primary electrical appliance and the secondary electrical appliance include a communication module. After detecting the selection operation by the user on the target secondary mode key, the control apparatus may send a control instruction to the secondary electrical appliance through the communication module of the primary electrical appliance to instruct the secondary electrical appliance to start operating according to the operating mode corresponding to the target secondary mode key and the function sub-mode corresponding to the target secondary function control. By way of example, the communication module may be a wireless communication module such as a Bluetooth module, a Zigbee module, a 4G communication module, or a 5G communication module. This is not limited in this embodiment of the present application.

The secondary electrical appliance includes a second display panel. While controlling the secondary electrical appliance communicatively connected to the primary electrical appliance to start operating according to the operating mode corresponding to the target secondary mode key and the function sub-mode corresponding to the target secondary function control, the control method of this embodiment of the present application may also include controlling the dynamic display area to display the operating parameter of the secondary electrical appliance and controlling the second display panel to display the displayed content of the dynamic display area synchronously.

By way of example, the operating parameter may be the remaining operating time of the device. In an example of the first display panel of the washing machine shown in FIG. 15, after the dryer starts operating, the static display area may display the remaining operating time of the dryer. The remaining operating time may be displayed on the second display panel of the dryer synchronously.

The static display area is also fixedly provided with at least one linkage mode key. Different linkage mode keys are configured to implement different linkage functions between the primary electrical appliance and the secondary electrical appliance.

The linkage mode key is configured to trigger the linkage mode. The linkage mode is configured to control the primary electrical appliance and the secondary electrical appliance to start operating in succession. By way of example, in an example of the washing machine and the dryer, the static display area may be fixedly provided with an a1 key and an a2 key, the a1 key is configured to implement the linkage function between the washing mode of the washing machine and the drying mode of the dryer, and the a2 key is configured to implement the linkage function between the washing mode of the washing machine and the care mode of the dryer.

When the primary electrical appliance is a pre-linked device, the at least one linkage mode key is associated one-to-one with the at least one secondary mode key, and the control method of this embodiment of the present application may also include: in response to a selection operation by the user on a first linkage mode key among the at least one linkage mode key, determine a target primary mode key selected from the at least one primary mode key and a first function control selected from the at least one primary function control and control the primary electrical appliance to start operating according to an operating mode corresponding to the target primary mode key and a function sub-mode corresponding to the first function control; and in response to the operating parameter of the primary electrical appliance satisfying a linkage switching condition corresponding to the first linkage mode key, control the primary electrical appliance to stop operating and control the secondary electrical appliance to start operating according to an operating mode corresponding to a secondary mode key associated with the first linkage mode key and the function sub-mode corresponding to the first function control.

In this embodiment of the present application, the pre-linked device is an electrical appliance that starts operating automatically first, and the later-linked device is an electrical appliance that starts operating automatically later.

When the primary electrical appliance is a pre-linked device, to control the secondary electrical appliance to start operating automatically after controlling the primary electrical appliance to operate, the at least one linkage mode key may be associated one-to-one with the at least one secondary mode key. As shown in FIG. 17, the static display area of the washing machine includes two linkage mode keys (that is, an a1 key and an a2 key in FIG. 17). The a1 key is associated with the secondary mode key corresponding to the operating mode of drying of FIG. 17. The a2 key is associated with the secondary mode key corresponding to the operating mode of care of FIG. 17.

The current target primary mode key may be a preset primary mode key or may be a mode key reselected by the user. The first function control is a shared control of the at least one primary function control and the at least one secondary function control. By way of example, the shared control of the washing machine and the dryer may be a function control corresponding to a function sub-mode corresponding to a clothes material such as down, wool, and silk.

The linkage switching condition may be a predetermined condition. For example, the linkage switching condition may be that the operating time reaches a preset time.

In an example in which the primary electrical appliance is a washing machine, the secondary electrical appliance is a dryer, and the display panel of the washing machine is the first display panel shown in FIG. 17, when the user needs to wash and dry clothes made of down, the user may perform a touch operation on the a1 key in the static display area and perform a touch operation on the first function control corresponding to the function sub-mode of down in the dynamic display area to make the control apparatus to control the washing machine to start operating according to the washing mode corresponding to the target primary mode key of washing and the function sub-mode of down and then, when the operating time of the washing machine satisfies the linkage switching condition corresponding to the a1 key, may control the washing machine to stop operating and control the dryer to start operating according to the drying mode associated with the a1 key and the function sub-mode of down.

In this embodiment of the present application, in response to determining that the operating parameter of the primary electrical appliance satisfies the linkage switching condition corresponding to the first linkage mode key, the first function control may also be displayed in a blinking manner to indicate to the user that the current execution device has changed.

While controlling the primary electrical appliance to start operating according to the operating mode corresponding to the target primary mode key and the function sub-mode corresponding to the first function control, the control method of this embodiment of the present application may also include controlling the secondary electrical appliance to pre-start according to a linkage rule corresponding to the first linkage mode key.

The linkage rule may be a predetermined rule. In an example in which the secondary electrical appliance is a dryer, the linkage rule may be to control the dryer to start preheating.

In this embodiment of the present application, to better implement linkage between the primary electrical appliance and the secondary electrical appliance, when the pre-linked device starts operating, the later-linked device may be controlled to pre-start operating. In this manner, when the later-linked device starts operating, the later-linked device can quickly enter the optimal operating state.

When the primary electrical appliance is a later-linked device, the at least one linkage mode key is associated one-to-one with the at least one primary mode key, and after controlling the dynamic display area to switch from the first interactive interface to the second interactive interface, the control method of this embodiment of the present application may also include: in response to a selection operation by the user on a second linkage mode key among the at least one linkage mode key and a selection operation by the user on a second function control among the at least one secondary function control, controlling the secondary electrical appliance to start operating according to the operating mode corresponding to the target secondary mode key and a function sub-mode corresponding to the second function control; and in response to the operating parameter of the secondary electrical appliance satisfying a linkage switching condition corresponding to the second linkage mode key, controlling the secondary electrical appliance to stop operating and controlling the primary electrical appliance to start operating according to an operating mode corresponding to a primary mode key associated with the second linkage mode key and the function sub-mode corresponding to the second function control.

The second function control is a shared control of the at least one primary function control and the at least one secondary function control.

When the primary electrical appliance is a later-linked device, to control the primary electrical appliance to start operating automatically after controlling the secondary electrical appliance to operate, the at least one linkage mode key may be associated one-to-one with the at least one primary mode key.

In this embodiment of the present application, in response to determining that the operating parameter of the secondary electrical appliance satisfies the linkage switching condition corresponding to the second linkage mode key, the second function control may also be displayed in a blinking manner to indicate to the user that the current execution device has changed.

While controlling the secondary electrical appliance to start operating according to the operating mode corresponding to the target secondary mode key and the function sub-mode corresponding to the second function control, the control method of this embodiment of the present application may also include controlling the primary electrical appliance to pre-start according to a linkage rule corresponding to the second linkage mode key.

In another embodiment, the static display area is also fixedly provided with a start lock key and a linkage lock key. The start lock key is configured to trigger a lock function. The linkage lock key is configured to trigger a one-key linkage function. After in response to the selection operation by the user on the target secondary function control among the at least one secondary function control, the control method of this embodiment of the present application may also include determining whether the lock function is triggered and determining whether the one-key linkage function is triggered; and in response to determining that the lock function is not triggered and the one-key linkage function is not triggered, triggering execution of the operation of controlling the secondary electrical appliance communicatively connected to the primary electrical appliance to start operating according to the operating mode corresponding to the target secondary mode key and the function sub-mode corresponding to the target secondary function control.

After the lock function is triggered, when the user performs a selection operation on the at least one secondary function control, the secondary electrical appliance does not start operating. After the one-key linkage function is triggered, the primary electrical appliance controls the primary electrical appliance and the secondary electrical appliance to start operating in succession. The one-key linkage function has a higher priority than the lock function.

Referring to FIG. 19, in an example in which the primary electrical appliance is a washing machine and the secondary electrical appliance is a dryer, an embodiment of the present application provides a diagram of a display panel. As shown in FIG. 19, compared with FIG. 17, in the static display area of the first display panel, it is feasible to provide no linkage mode key and to add the start lock key and the linkage lock key.

After determining whether the lock function is triggered and determining whether the one-key linkage function is triggered, the control method of this embodiment of the present application may also include in response to determining that the one-key linkage function is triggered, acquiring a target primary mode key selected from the at least one primary mode key and a target primary function control selected from the at least one primary function control; when the primary electrical appliance is a pre-linked device, controlling the primary electrical appliance to start operating according to an operating mode corresponding to the target primary mode key and a function sub-mode corresponding to the target primary function control; and then in response to determining that the operating parameter of the primary electrical appliance satisfies a linkage switching condition corresponding to the one-key linkage function, controlling the primary electrical appliance to stop operating and controlling the secondary electrical appliance to start operating according to the operating mode corresponding to the target secondary mode key and the function sub-mode corresponding to the target secondary function control; and when the secondary electrical appliance is a pre-linked device, controlling the secondary electrical appliance to start operating according to an operating mode corresponding to the target secondary mode key and a function sub-mode corresponding to the target secondary function control; and then in response to determining that an operating parameter of the secondary electrical appliance satisfies a linkage switching condition corresponding to the one-key linkage function, controlling the secondary electrical appliance to stop operating and controlling the primary electrical appliance to start operating according to the operating mode corresponding to the target primary mode key and the function sub-mode corresponding to the target primary function control.

In this embodiment of the present application, in the solution in which the linkage function of the primary electrical appliance and the secondary electrical appliance is implemented by using the linkage mode key, when operating, the primary electrical appliance and the secondary electrical appliance have the same function sub-mode. However, in practical application, the function sub-mode of the primary electrical appliance needed by the user may be different from the function sub-mode of the secondary electrical appliance; therefore, this embodiment of the present application also provides a solution of implementing a one-key linkage function in combination with the start lock key and the linkage lock key. When the user needs to control the primary electrical appliance and the secondary electrical appliance to start operating in succession automatically, the user may first perform a touch operation on the start lock key to trigger the lock function and then select the target primary mode key, the target secondary mode key, the target primary function control, and the target secondary function control according to needs. Then, the user may perform a touch operation on the linkage lock key to trigger the one-key linkage function to control the primary electrical appliance and the secondary electrical appliance to start operating in succession automatically according to the needed operating mode and the needed function sub-mode.

According to the preceding description, in the control method of this embodiment of the present application, the first display panel of the primary electrical appliance may include a static display area and a dynamic display area. The static display area is fixedly provided with at least one primary mode key and at least one secondary mode key. The primary mode key is configured to trigger the operating mode of the primary electrical appliance. The secondary mode key is configured to trigger the operating mode of the secondary electrical appliance. When the user needs to use the secondary electrical appliance, the user may select the needed target secondary mode key from the at least one secondary mode key. At this time, the dynamic display area is switched from the first interactive interface to the second interactive interface. The first interactive interface displays at least one primary function control. The primary mode control is configured to trigger the function sub-mode of the primary electrical appliance. The second interactive interface displays at least one secondary function control. The primary function control is configured to trigger the function sub-mode of the secondary electrical appliance. Then, the user may select the needed target secondary function control in the second interactive interface to control the secondary electrical appliance to start operating according to the operating mode corresponding to the target secondary mode key and the function sub-mode corresponding to the target secondary function control. It can be seen that in this embodiment of the present application, by configuring the first display panel of the primary electrical appliance to combine physical keys (corresponding to the static display area in the present application) and the display screen (corresponding to the dynamic display area in the present application), the user can switch the current to-be-controlled execution device (for example, from the primary electrical appliance to the secondary electrical appliance) by performing the selection operation on the physical key in the static display area and can also switch the displayed content of the dynamic display area (for example, from displaying at least one primary function control to displaying at least one secondary function control) so that the user can select the needed target secondary function control from the dynamic display area. Therefore, in this embodiment of the present application, the user can control the secondary electrical appliance to start operating according to the needed operating mode and the needed function sub-mode based on the user operation on the first display panel. In this manner, when an electrical appliance is placed at a location inconvenient for user operation, the user can operate the electrical appliance on another electrical appliance (placed at a location convenient for user operation). Thus, this embodiment of the present application can overcome the inconvenience for the user to operate the electrical appliance placed at an excessively high position, thereby improving the user experience. In addition, in this embodiment of the present application, the operation by the user on the physical key in the static display area may synchronously cause switching of the displayed content in the dynamic display area so that the displayed content in the dynamic display area can adapt to the current to-be-controlled execution device so that the user can accurately distinguish the current to-be-controlled execution device according to the displayed content in the dynamic display area so as to accurately complete the operation, thereby better improving the user experience.

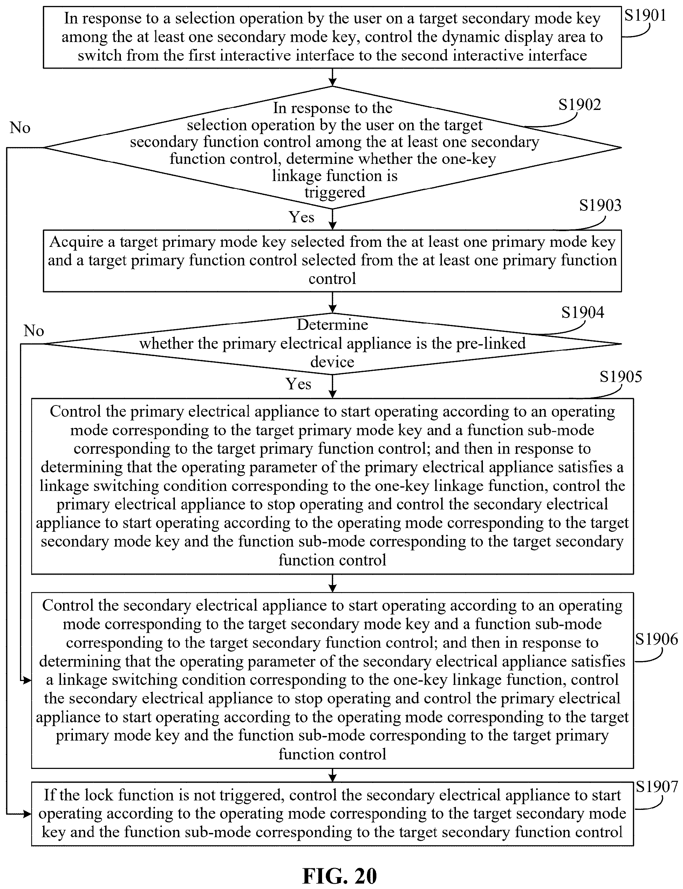

As shown in FIG. 20, an embodiment of the present application provides a control method. The method includes S1901 to S1907.

In S1901, in response to a selection operation by the user on a target secondary mode key among the at least one secondary mode key, the dynamic display area is controlled to switch from the first interactive interface to the second interactive interface.

In S1902, in response to the selection operation by the user on the target secondary function control among the at least one secondary function control, it is determined whether the one-key linkage function is triggered.

When it is determined that the one-key linkage function is triggered, step S1903 is performed. When it is determined that the one-key linkage function is not triggered, step S1907 is performed.

In S1903, a target primary mode key selected from the at least one primary mode key and a target primary function control selected from the at least one primary function control are acquired.

In S1904, it is determined whether the primary electrical appliance is the pre-linked device.

When it is determined that the primary electrical appliance is the pre-linked device, step S1905 is performed. When it is determined that the primary electrical appliance is the later-linked device, step S1906 is performed.

In S1905, the primary electrical appliance is controlled to start operating according to an operating mode corresponding to the target primary mode key and a function sub-mode corresponding to the target primary function control; and then in response to determining that the operating parameter of the primary electrical appliance satisfies a linkage switching condition corresponding to the one-key linkage function, the primary electrical appliance is controlled to stop operating, and the secondary electrical appliance is controlled to start operating according to the operating mode corresponding to the target secondary mode key and the function sub-mode corresponding to the target secondary function control.

In S1906, the secondary electrical appliance is controlled to start operating according to an operating mode corresponding to the target secondary mode key and a function sub-mode corresponding to the target secondary function control; and then in response to determining that the operating parameter of the secondary electrical appliance satisfies a linkage switching condition corresponding to the one-key linkage function, the secondary electrical appliance is controlled to stop operating, and the primary electrical appliance is controlled to start operating according to the operating mode corresponding to the target primary mode key and the function sub-mode corresponding to the target primary function control.

In S1907, if the lock function is not triggered, the secondary electrical appliance is controlled to start operating according to the operating mode corresponding to the target secondary mode key and the function sub-mode corresponding to the target secondary function control.

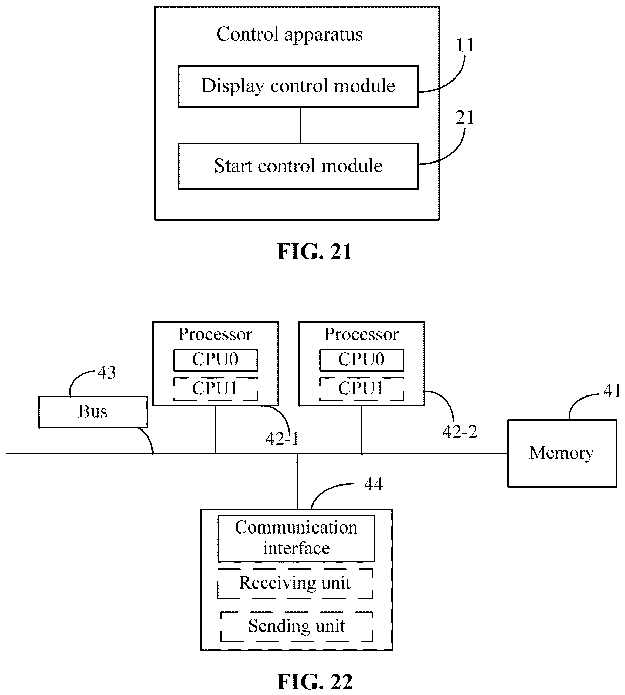

As shown in FIG. 21, an embodiment of the present application provides a control apparatus. The control apparatus may be configured in a primary electrical appliance. The primary electrical appliance includes a first display panel. The control apparatus may include a display control module 11 and a start control module 21.

The display control module 11 is configured to, when the first display panel is in a first interactive state, in response to a first operation by a user on the first display panel, control the first display panel to switch to a second interactive state. The start control module 21 is configured to, in response to a second operation by the user on the first display panel in the second interactive state, control a secondary electrical appliance communicatively connected to the primary electrical appliance to start operating based on the second operation.

Based on the previous embodiments, the display control module 11 is also configured to, in response to a power-on instruction for the primary electrical appliance, control the first display panel to display the first interactive interface; the display control module 11 is configured to, in response to a selection operation by the user on an interconnection function control in the first interactive interface, acquire the secondary electrical appliance interconnected with the primary electrical appliance and control the first display panel to display the second interactive interface corresponding to the secondary electrical appliance; and the start control module 21 is configured to acquire a target secondary mode control selected by the user from at least one secondary mode control in the second interactive interface and a target secondary function control selected from at least one secondary function control in the second interactive interface and control the secondary electrical appliance to start operating according to an operating mode corresponding to the target secondary mode control and a function sub-mode corresponding to the target secondary function control.

In an embodiment, the first interactive interface includes a main display area and a preset interconnection area. The main display area displays at least one primary mode control and at least one primary function control. The display control module 11 is configured to control the first display panel to superimpose the at least one secondary mode control and the at least one secondary function control onto the preset interconnection area of the first interactive interface to display the second interactive interface.

In another embodiment, the display control module 11 is configured to control the first display panel to cancel displaying the first interactive interface and to display the second interactive interface.

In another embodiment, the first interactive interface also displays a start lock control and a linkage lock control. The start lock control is configured to trigger a lock function. The linkage lock control is configured to trigger a one-key linkage function. The control apparatus of this embodiment of the present application also includes a determination module. The determination module is configured to, after the start control module 21 acquires the target secondary mode control selected by the user from the at least one secondary mode control in the second interactive interface and the target secondary function control selected from the at least one secondary function control in the second interactive interface, determine whether the lock function is triggered and determine whether the one-key linkage function is triggered. The start control module 21 is also configured to, in response to the determination module determining that the lock function is not triggered and the one-key linkage function is not triggered, control the secondary electrical appliance to start operating according to the operating mode corresponding to the target secondary mode control and the function sub-mode corresponding to the target secondary function control.

In another embodiment, the control apparatus of this embodiment of the present application may also include a trigger module and an acquisition module. The trigger module is configured to, before the display control module 11, in response to the selection operation by the user on the interconnection function control in the first interactive interface, acquires the secondary electrical appliance interconnected with the primary electrical appliance and controls the first display panel to display the second interactive interface corresponding to the secondary electrical appliance, in response to a selection operation by the user on the start lock control, trigger the lock function. The acquisition module is configured to acquire a target primary mode control selected by the user from at least one primary mode control in the first interactive interface and a target primary function control selected from at least one primary function control in the first interactive interface. The trigger module is also configured to, after the start control module 21 acquires the target secondary mode control selected by the user from the at least one secondary mode control in the second interactive interface and the target secondary function control selected from the at least one secondary function control in the second interactive interface, in response to a selection operation by the user on the linkage lock control, trigger the one-key linkage function.

In another embodiment, the secondary electrical appliance includes a second display panel.

The display control module 11 is also configured to, while the start control module 21 is controlling the secondary electrical appliance to start operating according to the operating mode corresponding to the target secondary mode control and the function sub-mode corresponding to the target secondary function control, control the first display panel to display the operating parameter of the secondary electrical appliance and control the second display panel to display the displayed content of the first display panel synchronously.

In another embodiment, the control apparatus of this embodiment of the present application may also include a determination module, and the first interactive interface also displays an interconnection trigger control. The display control module 11 is also configured to, after in response to the power-on instruction for the primary electrical appliance, controlling the first display panel to display the first interactive interface, in response to a selection operation by the user on the interconnection trigger control, control the first display panel to display a third interactive interface, where the third interactive interface displays at least one to-be-selected device control, the at least one to-be-selected device control corresponds one-to-one to at least one to-be-selected electrical appliance, and the at least one to-be-selected electrical appliance is at least one device communicatively connected to the primary electrical appliance. The determination module is configured to, in response to a selection operation by the user on a target to-be-selected device control among the at least one to-be-selected device control, determine a to-be-selected electrical appliance corresponding to the target to-be-selected device control as the secondary electrical appliance. The display control module 11 is also configured to control the first display panel to switch from the third interactive interface back to the first interactive interface and add a device icon of the secondary electrical appliance at a preset position of the first interactive interface.

In another embodiment, the control apparatus of this embodiment of the present application may also include a creation module, and the first interactive interface also displays a device add control. The display control module 11 is also configured to, after in response to the power-on instruction for the primary electrical appliance, controlling the first display panel to display the first interactive interface, in response to a selection operation by the user on the device add control, control the first display panel to display a fourth interactive interface, where the fourth interactive interface displays at least one candidate device control, the at least one candidate device control corresponds one-to-one to at least one candidate electrical appliance, and the at least one candidate electrical appliance is at least one device operating a function of being searched. The creation module is configured to, in response to a selection operation by the user on a target candidate device control among the at least one candidate device control, establish a communicative connection relationship between a candidate electrical appliance corresponding to the target candidate device control and the primary electrical appliance and add the candidate electrical appliance corresponding to the target candidate device control to the at least one to-be-selected electrical appliance.

In another embodiment, the first interactive interface also displays an interconnection search switch control, and the start control module 21 is also configured to, after the display control module 11, in response to the power-on instruction for the primary electrical appliance, controls the first display panel to display the first interactive interface, in response to detecting a first preset trigger operation by the user on the interconnection search switch control, control the primary electrical appliance to enable the function of being searched; and in response to detecting a second preset trigger operation by the user on the interconnection search switch control, control the primary electrical appliance to disable the function of being searched.

The control apparatus may also include a storage module. The storage module is configured to store, for example, program code of the control apparatus.

Based on the previous embodiments, the first display panel is fixedly provided with at least one primary function key, at least one shared function key, and at least one secondary mode key.

The display control module 11 is also configured to, in response to a power-on instruction for the primary electrical appliance, control the first display panel to display the at least one primary function key, the at least one shared function key, and the at least one secondary mode key according to the first preset rule. The display control module 11 is configured to, in response to a target secondary mode key selected from the at least one secondary mode key, control the first display panel to display the at least one primary function key, the at least one shared function key, and the at least one secondary mode key according to the second preset rule. The start control module 21 is configured to, in response to a first shared function key selected from the at least one shared function key, control the secondary electrical appliance communicatively connected to the primary electrical appliance to start operating according to an operating mode corresponding to the target secondary mode key and a function sub-mode corresponding to the first shared function key.

The display control module 11 is configured to, in response to the power-on instruction for the primary electrical appliance, control the first display panel to display the at least one primary function key and the at least one shared function key in a first preset display manner and to display the at least one secondary mode key in a second preset display manner; and, in response to the target secondary mode key selected from the at least one secondary mode key, control the first display panel to display the at least one primary function key in a third preset display manner and to display the target secondary mode key in the first preset display manner.

The display control module 11 is also configured to, in response to the power-on instruction for the primary electrical appliance, control the first display panel to display the at least one primary function key and the at least one shared function key and to display the at least one secondary mode key in a half-bright manner; and, in response to the target secondary mode key selected from the at least one secondary mode key, control the first display panel to cancel displaying the at least one primary function key and to display the target secondary mode key in a full-bright manner.

The first display panel is also fixedly provided with at least one primary mode key. The display control module 11 is also configured to, while controlling the first display panel to display the at least one primary function key and the at least one shared function key and to display the at least one secondary mode key in the half-bright manner, control the first display panel to display a preset primary mode key among the at least one primary mode key in the full-bright manner and to display a non-preset primary mode key among the at least one primary mode key in the half-bright manner.

The first display panel is also fixedly provided with at least one linkage mode key. When the primary electrical appliance is a pre-linked device, the at least one linkage mode key is associated one-to-one with the at least one secondary mode key. When the primary electrical appliance is a later-linked device, the at least one linkage mode key is associated one-to-one with the at least one primary mode key.

When the primary electrical appliance is the pre-linked device, the start control module 21 is also configured to:
after the display control module 11 controls the first display panel to display the at least one primary function key and the at least one shared function key and to display the at least one secondary mode key in the half-bright manner, in response to a first linkage mode key selected from the at least one linkage mode key, determine a second shared function key selected from the at least one shared function key and a target primary mode key selected from the at least one primary mode key and control the primary electrical appliance to start operating according to an operating mode corresponding to the target primary mode key and a function sub-mode corresponding to the second shared function key; and in response to the operating parameter of the primary electrical appliance satisfying a linkage switching condition corresponding to the first linkage mode key, control the primary electrical appliance to stop operating and control the secondary electrical appliance to start operating according to an operating mode corresponding to a secondary mode key associated with the first linkage mode key and the function sub-mode corresponding to the second shared function key.

The start control module 21 is also configured to, while controlling the primary electrical appliance to start operating according to the operating mode corresponding to the target primary mode key and the function sub-mode corresponding to the second shared function key, control the secondary electrical appliance to pre-start according to a linkage rule corresponding to the first linkage mode key.

When the primary electrical appliance is the later-linked device, the start control module 21 is also configured to: after the display control module 11 controls the first display panel to cancel displaying the at least one primary function key and to display the target secondary mode key in the full-bright manner, in response to a second linkage mode key selected from the at least one linkage mode key, determine a third shared function key selected from the at least one shared function key and control the secondary electrical appliance to start operating according to the operating mode corresponding to the target secondary mode key and a function sub-mode corresponding to the third shared function key; and in response to the operating parameter of the secondary electrical appliance satisfying a linkage switching condition corresponding to the second linkage mode key, control the secondary electrical appliance to stop operating and control the primary electrical appliance to start operating according to an operating mode corresponding to a primary mode key associated with the second linkage mode key and the function sub-mode corresponding to the third shared function key.

The secondary electrical appliance includes a second display panel. The display control module 11 is also configured to, while the start control module 21 is controlling the secondary electrical appliance communicatively connected to the primary electrical appliance to start operating according to the operating mode corresponding to the target secondary mode key and the function sub-mode corresponding to the first shared function key, control the first display panel to cancel displaying a non-first shared function key among the at least one shared function key and to display the operating parameter of the primary electrical appliance and control the second display panel to display the displayed content of the first display panel synchronously.

The first display panel is further fixedly provided with an interconnection trigger key and an interconnection state key. The control apparatus may also include a creation module.

The creation module is configured to, before the display control module 11 controls the first display panel to display the at least one primary function key, the at least one shared function key, and the at least one secondary mode key according to the first preset rule, when the primary electrical appliance and the secondary electrical appliance are both in a power-on state, in response to a preset trigger operation on the interconnection trigger key, create a communicative connection relationship between the primary electrical appliance and the secondary electrical appliance. The display control module 11 is also configured to, while controlling the first display panel to display the at least one primary function key, the at least one shared function key, and the at least one secondary mode key according to the first preset rule, control the first display panel to display the interconnection state key.

The control apparatus may also include a storage module. The storage module is configured to store, for example, program code of the control apparatus.

Based on the previous embodiments, the first display panel includes a static display area and a dynamic display area. The static display area is fixedly provided with at least one primary mode key and at least one secondary mode key.

The display control module 11 is configured to, in response to a selection operation by the user on a target secondary mode key among the at least one secondary mode key, control the dynamic display area to switch from the first interactive interface to the second interactive interface, where the first interactive interface displays at least one primary function control, and the second interactive interface displays at least one secondary function control. The start control module 21 is configured to, in response to a selection operation by the user on a target secondary function control among the at least one secondary function control, control the secondary electrical appliance communicatively connected to the primary electrical appliance to start operating according to an operating mode corresponding to the target secondary mode key and a function sub-mode corresponding to the target secondary function control.

The static display area is also fixedly provided with a start lock key and a linkage lock key. The start lock key is configured to trigger a lock function. The linkage lock key is configured to trigger a one-key linkage function. The control apparatus of this embodiment of the present application also includes a determination module. The determination module is configured to, after in response to the selection operation by the user on the target secondary function control among the at least one secondary function control, determine whether the lock function is triggered and determine whether the one-key linkage function is triggered. The determination module is also configured to, in response to determining that the lock function is not triggered and the one-key linkage function is not triggered, trigger execution of the operation of controlling the secondary electrical appliance communicatively connected to the primary electrical appliance to start operating according to the operating mode corresponding to the target secondary mode key and the function sub-mode corresponding to the target secondary function control.

The determination module is also configured to, after determining whether the lock function is triggered and determining whether the one-key linkage function is triggered, in response to determining that the one-key linkage function is triggered, acquire a target primary mode key selected from the at least one primary mode key and a target primary function control selected from the at least one primary function control. The start control module 21 is also configured to, when the primary electrical appliance is a pre-linked device, control the primary electrical appliance to start operating according to an operating mode corresponding to the target primary mode key and a function sub-mode corresponding to the target primary function control; and then in response to determining that the operating parameter of the primary electrical appliance satisfies a linkage switching condition corresponding to the one-key linkage function, control the primary electrical appliance to stop operating and control the secondary electrical appliance to start operating according to the operating mode corresponding to the target secondary mode key and the function sub-mode corresponding to the target secondary function control. The start control module 21 is also configured to, when the secondary electrical appliance is a pre-linked device, control the secondary electrical appliance to start operating according to an operating mode corresponding to the target secondary mode key and a function sub-mode corresponding to the target secondary function control; and then in response to determining that the operating parameter of the secondary electrical appliance satisfies a linkage switching condition corresponding to the one-key linkage function, control the secondary electrical appliance to stop operating and control the primary electrical appliance to start operating according to the operating mode corresponding to the target primary mode key and the function sub-mode corresponding to the target primary function control.

The static display area is also fixedly provided with at least one linkage mode key. Different linkage mode keys are configured to implement different linkage functions between the primary electrical appliance and the secondary electrical appliance.

When the primary electrical appliance is a pre-linked device, the at least one linkage mode key is associated one-to-one with the at least one secondary mode key. The start control module 21 is also configured to:
in response to a selection operation by the user on a first linkage mode key among the at least one linkage mode key, determine a target primary mode key selected from the at least one primary mode key and a first function control selected from the at least one primary function control and control the primary electrical appliance to start operating according to an operating mode corresponding to the target primary mode key and a function sub-mode corresponding to the first function control, where the first function control is a shared control of the at least one primary function control and the at least one secondary function control; and in response to the operating parameter of the primary electrical appliance satisfying a linkage switching condition corresponding to the first linkage mode key, control the primary electrical appliance to stop operating and control the secondary electrical appliance to start operating according to an operating mode corresponding to a secondary mode key associated with the first linkage mode key and the function sub-mode corresponding to the first function control.

When the primary electrical appliance is a later-linked device, the at least one linkage mode key is associated one-to-one with the at least one primary mode key. The start control module 21 is also configured to: after the display control module 11 controls the dynamic display area to switch from the first interactive interface to the second interactive interface, in response to a selection operation by the user on a second linkage mode key among the at least one linkage mode key and a selection operation by the user on a second function control among the at least one secondary function control, control the secondary electrical appliance to start operating according to the operating mode corresponding to the target secondary mode key and a function sub-mode corresponding to the second function control, where the second function control is a shared control of the at least one primary function control and the at least one secondary function control; and in response to the operating parameter of the secondary electrical appliance satisfying a linkage switching condition corresponding to the second linkage mode key, control the secondary electrical appliance to stop operating and control the primary electrical appliance to start operating according to an operating mode corresponding to a primary mode key associated with the second linkage mode key and the function sub-mode corresponding to the second function control.

The secondary electrical appliance includes a second display panel. The display control module 11 is also configured to, while the start control module 21 is controlling the secondary electrical appliance communicatively connected to the primary electrical appliance to start operating according to the operating mode corresponding to the target secondary mode key and the function sub-mode corresponding to the target secondary function control, control the dynamic display area to display the operating parameter of the secondary electrical appliance and control the second display panel to display the displayed content of the dynamic display area synchronously.

The static display area is also fixedly provided with an interconnection trigger key and an interconnection state key. The control apparatus may also include a creation module. The creation module is configured to, before in response to the selection operation by the user on the target secondary mode key among the at least one secondary mode key, when the primary electrical appliance and the secondary electrical appliance are both in a power-on state, in response to a preset trigger operation by the user on the interconnection trigger key, create a communicative connection relationship between the primary electrical appliance and the secondary electrical appliance. The display control module 11 is also configured to control the at least one secondary mode key in the static display area to switch from a first display state to a second display state and control the interconnection state key in the static display area to switch from the first display state to a third display state.

The control apparatus may also include a storage module. The storage module is configured to store, for example, program code of the control apparatus.

As shown in FIG. 22, an embodiment of the present application provides a control device. The control device may be a primary electrical appliance or the main control board of the primary electrical appliance. The control device includes a memory 41, a processor (for example, 42-1 and 42-2 in FIG. 22), a bus 43, and a communication interface 44. The memory 41 is configured to store computer-executable instructions. The processor is connected to the memory 41 via the bus 43. When the control device is operating, the processor executes the computer-executable instructions stored in the memory 41 so that the control device performs the control method of any preceding embodiment.

In implementation, in an embodiment, the processor may include one or more central processing units (CPUs), for example, CPU0 and CPU1 shown in FIG. 22. In an embodiment, the control device may include multiple processors, for example, processor 42-1 and processor 42-2 shown in FIG. 22. Each CPU among these processors may be a single-core processor (single-CPU) or a multi-core processor (multi-CPU). Here, the processors may refer to one or more devices, circuits, and/or processing cores configured to process data (for example, computer program instructions).

The memory 41 may include, but not limited to, a read-only memory (ROM) or another type of static storage device capable of storing static information and instructions, a random access memory (RAM) or another type of dynamic storage device capable of storing information and instructions, an electrically erasable programmable read-only memory (EEPROM), a compact disc read-only memory (CD-ROM) or another optical disc storage, an optical disc medium (including a compressed optical disc, a laser disc, an optical disc, a digital versatile disc, or a Blu-ray disc), a magnetic disk storage medium or another magnetic storage device, or any other medium that can be configured to carry or store desired program code in the form of instructions or data structures and can be accessed by a computer. The memory 41 may exist independently and be connected to the processor via the bus 43. The memory 41 may also be integrated with the processor.

In implementation, the memory 41 is configured to store data of the present application and execute computer-executable instructions corresponding to software programs of the present application. The processor can control various functions of the device by running or executing software programs stored in the memory 41 and by accessing data stored in the memory 41.

The communication interface 44 uses any transceiver-like device and is configured to communicate with other devices or communication networks, such as a control system, a radio access network (RAN), and a wireless local area network (WLAN). The communication interface 44 may include a receiving unit configured to implement the receiving function and a sending unit configured to implement the sending function.

The bus 43 may be an Industry Standard Architecture (ISA) bus, a Peripheral Component Interconnect (PCI) bus or an Extended Industry Standard Architecture (EISA) bus. The bus 43 may include an address bus, a data bus, and a control bus. For ease of representation, the bus is represented by only one thick line in FIG. 22, which does not indicate that there is only one bus or one type of bus.

In an example, with reference to FIG. 21, the functions implemented by the start control module in the control apparatus are the same as the functions implemented by the processor in FIG. 22. When the control apparatus includes a storage module, the functions implemented by the storage module are the same as the functions implemented by the memory in FIG. 22.

For the explanations of relevant content in this embodiment, see the method embodiments. This is not described here.

Through the description of the preceding embodiments, it is to be clearly understood by those skilled in the art that for the convenience and simplicity of the description, the division of various preceding function modules is used as an example. In practice, the preceding functions may be assigned to different function modules according to needs, that is, the internal structure of the device is divided into different function modules so as to implement all or part of the preceding functions. For the operating processes of the preceding systems, devices, and units, see the corresponding processes in the method embodiments. This is not described here.

An embodiment of the present application provides a computer-readable storage medium. The computer-readable storage medium stores instructions which, when executed by a computer, cause the computer to perform the control method of any previous embodiment.

The computer-readable storage medium may be, but is not limited to, an electrical, magnetic, optical, electromagnetic, infrared, or semiconductor system, apparatus, or device, or any combination thereof. Examples (a non-exhaustive list) of the computer-readable storage medium include an electrical connection having one or more wires, a portable computer magnetic disk, a hard disk, a random-access memory (RAM), a read-only memory (ROM), an erasable programmable read-only memory (EPROM), a register, a hard disk, an optical fiber, a CD-ROM, an optical storage device, a magnetic storage device, any suitable combination thereof, or any other forms of computer-readable storage media well known in the art. An example storage medium is coupled to a processor such that the processor can read information from the storage medium and write information to the storage medium. Of course, the storage medium may also be part of the processor. The processor and the storage medium may be located within an application-specific integrated circuit (ASIC). In this embodiment of the present application, the computer-readable storage medium may be any tangible medium including or storing a program. The program may be used by or in conjunction with an instruction execution system, apparatus, or device.

## Claims

1. A control method, the control method being applied to a primary electrical appliance, the primary electrical appliance comprising a first display panel, and the control method comprising:
when the first display panel is in a first interactive state, in response to a first operation by a user on the first display panel, controlling the first display panel to switch to a second interactive state; and
in response to a second operation by the user on the first display panel in the second interactive state, controlling a secondary electrical appliance communicatively connected to the primary electrical appliance to start operating based on the second operation.

2. The control method of claim 1, wherein the first interactive state comprises a state in which the first display panel displays a first interactive interface, and the second interactive state comprises a state in which the first display panel displays a second interactive interface;
before when the first display panel is in the first interactive state, in response to the first operation by the user on the first display panel, controlling the first display panel to switch to the second interactive state, the control method comprises:
in response to a power-on instruction for the primary electrical appliance, controlling the first display panel to display the first interactive interface;
when the first display panel is in the first interactive state, in response to the first operation by the user on the first display panel, controlling the first display panel to switch to the second interactive state comprises:
in response to a selection operation by the user on an interconnection function control in the first interactive interface, acquiring the secondary electrical appliance interconnected with the primary electrical appliance and controlling the first display panel to display the second interactive interface corresponding to the secondary electrical appliance; and
in response to the second operation by the user on the first display panel in the second interactive state, controlling the secondary electrical appliance communicatively connected to the primary electrical appliance to start operating based on the second operation comprises:
acquiring a target secondary mode control selected by the user from at least one secondary mode control in the second interactive interface and a target secondary function control selected from at least one secondary function control in the second interactive interface and controlling the secondary electrical appliance to start operating according to an operating mode corresponding to the target secondary mode control and a function sub-mode corresponding to the target secondary function control.

3. The control method of claim 2, wherein the first interactive interface comprises a main display area and a preset interconnection area, the main display area displays at least one primary mode control and at least one primary function control, and controlling the first display panel to display the second interactive interface corresponding to the secondary electrical appliance comprises:
controlling the first display panel to superimpose the at least one secondary mode control and the at least one secondary function control onto the preset interconnection area of the first interactive interface to display the second interactive interface.

4. The control method of claim 2, wherein controlling the first display panel to display the second interactive interface corresponding to the secondary electrical appliance comprises:
controlling the first display panel to cancel displaying the first interactive interface and to display the second interactive interface.

5. The control method of claim 2, wherein the first interactive interface further displays a start lock control and a linkage lock control, the start lock control is configured to trigger a lock function, and the linkage lock control is configured to trigger a one-key linkage function;
after acquiring the target secondary mode control selected by the user from the at least one secondary mode control in the second interactive interface and the target secondary function control selected from the at least one secondary function control in the second interactive interface, the control method further comprises:
determining whether the lock function is triggered and determining whether the one-key linkage function is triggered; and
controlling the secondary electrical appliance to start operating according to the operating mode corresponding to the target secondary mode control and the function sub-mode corresponding to the target secondary function control comprises:
in response to determining that the lock function is not triggered and the one-key linkage function is not triggered, triggering execution of the operation of controlling the secondary electrical appliance to start operating according to the operating mode corresponding to the target secondary mode control and the function sub-mode corresponding to the target secondary function control.

6. The control method of claim 5, wherein before in response to the selection operation by the user on the interconnection function control in the first interactive interface, acquiring the secondary electrical appliance interconnected with the primary electrical appliance and controlling the first display panel to display the second interactive interface corresponding to the secondary electrical appliance, the control method further comprises:
in response to a selection operation by the user on the start lock control, triggering the lock function; and
acquiring a target primary mode control selected by the user from at least one primary mode control in the first interactive interface and a target primary function control selected from at least one primary function control in the first interactive interface; and
after acquiring the target secondary mode control selected by the user from the at least one secondary mode control in the second interactive interface and the target secondary function control selected from the at least one secondary function control in the second interactive interface, the control method further comprises:
in response to a selection operation by the user on the linkage lock control, triggering the one-key linkage function.

7. The control method of claim 2, wherein the secondary electrical appliance comprises a second display panel, and while controlling the secondary electrical appliance to start operating according to the operating mode corresponding to the target secondary mode control and the function sub-mode corresponding to the target secondary function control, the control method further comprises:
controlling the first display panel to display an operating parameter of the secondary electrical appliance and controlling the second display panel to display the displayed content of the first display panel synchronously.

8. The control method of claim 2, wherein the first interactive interface further displays an interconnection trigger control, and after in response to the power-on instruction for the primary electrical appliance, controlling the first display panel to display the first interactive interface, the control method further comprises:
in response to a selection operation by the user on the interconnection trigger control, controlling the first display panel to display a third interactive interface, wherein the third interactive interface displays at least one to-be-selected device control, the at least one to-be-selected device control corresponds one-to-one to at least one to-be-selected electrical appliance, and the at least one to-be-selected electrical appliance is at least one device communicatively connected to the primary electrical appliance;
in response to a selection operation by the user on a target to-be-selected device control among the at least one to-be-selected device control, determining a to-be-selected electrical appliance corresponding to the target to-be-selected device control as the secondary electrical appliance; and
controlling the first display panel to switch from the third interactive interface back to the first interactive interface and adding a device icon of the secondary electrical appliance at a preset position of the first interactive interface.

9. The control method of claim 8, wherein the first interactive interface further displays a device add control, and after in response to the power-on instruction for the primary electrical appliance, controlling the first display panel to display the first interactive interface, the control method further comprises:
in response to a selection operation by the user on the device add control, controlling the first display panel to display a fourth interactive interface, wherein the fourth interactive interface displays at least one candidate device control, the at least one candidate device control corresponds one-to-one to at least one candidate electrical appliance, and the at least one candidate electrical appliance is at least one device operating in a function of being searched; and
in response to a selection operation by the user on a target candidate device control among the at least one candidate device control, establishing a communicative connection relationship between a candidate electrical appliance corresponding to the target candidate device control and the primary electrical appliance and adding the candidate electrical appliance corresponding to the target candidate device control to the at least one to-be-selected electrical appliance.

10. The control method of claim 9, wherein the first interactive interface further displays an interconnection search switch control, and after in response to the power-on instruction for the primary electrical appliance, controlling the first display panel to display the first interactive interface, the control method further comprises:
in response to detecting a first preset trigger operation by the user on the interconnection search switch control, controlling the primary electrical appliance to enable the function of being searched; and
in response to detecting a second preset trigger operation by the user on the interconnection search switch control, controlling the primary electrical appliance to disable the function of being searched.

11. The control method of claim 1, wherein the first display panel is fixedly provided with at least one primary function key, at least one shared function key, and at least one secondary mode key; the first interactive state comprises a state in which the first display panel displays the at least one primary function key, the at least one shared function key, and the at least one secondary mode key according to a first preset rule; and the second interactive state comprises a state in which the first display panel displays the at least one primary function key, the at least one shared function key, and the at least one secondary mode key according to a second preset rule;
before when the first display panel is in the first interactive state, in response to the first operation by the user on the first display panel, controlling the first display panel to switch to the second interactive state, the control method comprises:
in response to a power-on instruction for the primary electrical appliance, controlling the first display panel to display the at least one primary function key, the at least one shared function key, and the at least one secondary mode key according to the first preset rule;
when the first display panel is in the first interactive state, in response to the first operation by the user on the first display panel, controlling the first display panel to switch to the second interactive state comprises:
in response to a target secondary mode key selected from the at least one secondary mode key, controlling the first display panel to display the at least one primary function key, the at least one shared function key, and the at least one secondary mode key according to the second preset rule; and
in response to the second operation by the user on the first display panel in the second interactive state, controlling the secondary electrical appliance communicatively connected to the primary electrical appliance to start operating based on the second operation comprises:
in response to a first shared function key selected from the at least one shared function key, controlling the secondary electrical appliance communicatively connected to the primary electrical appliance to start operating according to an operating mode corresponding to the target secondary mode key and a function sub-mode corresponding to the first shared function key.

12. The control method of claim 11, wherein controlling the first display panel to display the at least one primary function key, the at least one shared function key, and the at least one secondary mode key according to the first preset rule comprises:
controlling the first display panel to display the at least one primary function key and the at least one shared function key in a first preset display manner and to display the at least one secondary mode key in a second preset display manner; and
controlling the first display panel to display the at least one primary function key, the at least one shared function key, and the at least one secondary mode key according to the second preset rule comprises:
controlling the first display panel to display the at least one primary function key in a third preset display manner and to display the target secondary mode key in the first preset display manner.

13. The control method of claim 12, wherein controlling the first display panel to display the at least one primary function key and the at least one shared function key in the first preset display manner and to display the at least one secondary mode key in the second preset display manner comprises:
controlling the first display panel to display the at least one primary function key and the at least one shared function key and to display the at least one secondary mode key in a half-bright manner; and
controlling the first display panel to display the at least one primary function key in the third preset display manner and to display the target secondary mode key in the first preset display manner comprises:
controlling the first display panel to cancel displaying the at least one primary function key and to display the target secondary mode key in a full-bright manner.

14. The control method of claim 13, wherein the first display panel is further fixedly provided with at least one primary mode key; and
while controlling the first display panel to display the at least one primary function key and the at least one shared function key and to display the at least one secondary mode key in the half-bright manner, the control method further comprises:
controlling the first display panel to display a preset primary mode key among the at least one primary mode key in the full-bright manner and to display a non-preset primary mode key among the at least one primary mode key in the half-bright manner.

15. The control method of claim 14, wherein the first display panel is further fixedly provided with at least one linkage mode key; and
when the primary electrical appliance is a pre-linked device, the at least one linkage mode key is associated one-to-one with the at least one secondary mode key; and when the primary electrical appliance is a later-linked device, the at least one linkage mode key is associated one-to-one with the at least one primary mode key.

16. The control method of claim 15, wherein when the primary electrical appliance is the pre-linked device, after controlling the first display panel to display the at least one primary function key and the at least one shared function key and to display the at least one secondary mode key in the half-bright manner, the control method further comprises:
in response to a first linkage mode key selected from the at least one linkage mode key, determining a second shared function key selected from the at least one shared function key and a target primary mode key selected from the at least one primary mode key and controlling the primary electrical appliance to start operating according to an operating mode corresponding to the target primary mode key and a function sub-mode corresponding to the second shared function key; and
in response to an operating parameter of the primary electrical appliance satisfying a linkage switching condition corresponding to the first linkage mode key, controlling the primary electrical appliance to stop operating and controlling the secondary electrical appliance to start operating according to an operating mode corresponding to a secondary mode key associated with the first linkage mode key and the function sub-mode corresponding to the second shared function key.

17. The control method of claim 16, wherein while controlling the primary electrical appliance to start operating according to the operating mode corresponding to the target primary mode key and the function sub-mode corresponding to the second shared function key, the control method further comprises:
controlling the secondary electrical appliance to pre-start according to a linkage rule corresponding to the first linkage mode key.

18. The control method of claim 15, wherein when the primary electrical appliance is the later-linked device, after controlling the first display panel to cancel displaying the at least one primary function key and to display the target secondary mode key in the full-bright manner, the control method further comprises:
in response to a second linkage mode key selected from the at least one linkage mode key, determining a third shared function key selected from the at least one shared function key and controlling the secondary electrical appliance to start operating according to the operating mode corresponding to the target secondary mode key and a function sub-mode corresponding to the third shared function key; and
in response to an operating parameter of the secondary electrical appliance satisfying a linkage switching condition corresponding to the second linkage mode key, controlling the secondary electrical appliance to stop operating and controlling the primary electrical appliance to start operating according to an operating mode corresponding to a primary mode key associated with the second linkage mode key and the function sub-mode corresponding to the third shared function key.

19. The control method of claim 11, wherein the secondary electrical appliance comprises a second display panel, and while controlling the secondary electrical appliance communicatively connected to the primary electrical appliance to start operating according to the operating mode corresponding to the target secondary mode key and the function sub-mode corresponding to the first shared function key, the control method further comprises:
controlling the first display panel to cancel displaying a non-first shared function key among the at least one shared function key and to display an operating parameter of the primary electrical appliance and controlling the second display panel to display the displayed content of the first display panel synchronously.

20. The control method of any one of claims 11 to 19, wherein the first display panel is further fixedly provided with an interconnection trigger key and an interconnection state key, and the control method further comprises:
when the primary electrical appliance and the secondary electrical appliance are both in a power-on state, in response to a preset trigger operation on the interconnection trigger key, creating a communicative connection relationship between the primary electrical appliance and the secondary electrical appliance; and
while controlling the first display panel to display the at least one primary function key, the at least one shared function key, and the at least one secondary mode key according to the first preset rule, the control method further comprises:
controlling the first display panel to display the interconnection state key.

21. The control method of claim 1, wherein the first display panel comprises a static display area and a dynamic display area, the static display area is fixedly provided with at least one primary mode key and at least one secondary mode key, the first interactive state comprises a state in which the dynamic display area displays a first interactive interface, and the second interactive state comprises a state in which the dynamic display area displays a second interactive interface;
when the first display panel is in the first interactive state, in response to the first operation by the user on the first display panel, controlling the first display panel to switch to the second interactive state comprises:
in response to a selection operation by the user on a target secondary mode key among the at least one secondary mode key, controlling the dynamic display area to switch from the first interactive interface to the second interactive interface, wherein the first interactive interface displays at least one primary function control, and the second interactive interface displays at least one secondary function control; and
in response to the second operation by the user on the first display panel in the second interactive state, controlling the secondary electrical appliance communicatively connected to the primary electrical appliance to start operating based on the second operation comprises:
in response to a selection operation by the user on a target secondary function control among the at least one secondary function control, controlling the secondary electrical appliance communicatively connected to the primary electrical appliance to start operating according to an operating mode corresponding to the target secondary mode key and a function sub-mode corresponding to the target secondary function control.

22. The control method of claim 21, wherein the static display area is further fixedly provided with a start lock key and a linkage lock key, the start lock key is configured to trigger a lock function, and the linkage lock key is configured to trigger a one-key linkage function;
after in response to the selection operation by the user on the target secondary function control among the at least one secondary function control, the control method further comprises:
determining whether the lock function is triggered and determining whether the one-key linkage function is triggered; and
controlling the secondary electrical appliance communicatively connected to the primary electrical appliance to start operating according to the operating mode corresponding to the target secondary mode key and the function sub-mode corresponding to the target secondary function control comprises:
in response to determining that the lock function is not triggered and the one-key linkage function is not triggered, triggering execution of the operation of controlling the secondary electrical appliance communicatively connected to the primary electrical appliance to start operating according to the operating mode corresponding to the target secondary mode key and the function sub-mode corresponding to the target secondary function control.

23. The control method of claim 22, wherein after determining whether the lock function is triggered and determining whether the one-key linkage function is triggered, the control method further comprises:
in response to determining that the one-key linkage function is triggered, acquiring a target primary mode key selected from the at least one primary mode key and a target primary function control selected from the at least one primary function control;
when the primary electrical appliance is a pre-linked device, controlling the primary electrical appliance to start operating according to an operating mode corresponding to the target primary mode key and a function sub-mode corresponding to the target primary function control; and then in response to determining that an operating parameter of the primary electrical appliance satisfies a linkage switching condition corresponding to the one-key linkage function, controlling the primary electrical appliance to stop operating and controlling the secondary electrical appliance to start operating according to the operating mode corresponding to the target secondary mode key and the function sub-mode corresponding to the target secondary function control; and
when the secondary electrical appliance is a pre-linked device, controlling the secondary electrical appliance to start operating according to an operating mode corresponding to the target secondary mode key and a function sub-mode corresponding to the target secondary function control; and then in response to determining that an operating parameter of the secondary electrical appliance satisfies a linkage switching condition corresponding to the one-key linkage function, controlling the secondary electrical appliance to stop operating and controlling the primary electrical appliance to start operating according to the operating mode corresponding to the target primary mode key and the function sub-mode corresponding to the target primary function control.

24. The control method of claim 21, wherein the static display area is further fixedly provided with at least one linkage mode key, and different linkage mode keys are configured to implement different linkage functions between the primary electrical appliance and the secondary electrical appliance.

25. The control method of claim 24, wherein when the primary electrical appliance is a pre-linked device, the at least one linkage mode key is associated one-to-one with the at least one secondary mode key, and the control method further comprises:
in response to a selection operation by the user on a first linkage mode key among the at least one linkage mode key, determining a target primary mode key selected from the at least one primary mode key and a first function control selected from the at least one primary function control and controlling the primary electrical appliance to start operating according to an operating mode corresponding to the target primary mode key and a function sub-mode corresponding to the first function control, wherein the first function control is a shared control of the at least one primary function control and the at least one secondary function control; and
in response to an operating parameter of the primary electrical appliance satisfies a linkage switching condition corresponding to the first linkage mode key, controlling the primary electrical appliance to stop operating and controlling the secondary electrical appliance to start operating according to an operating mode corresponding to a secondary mode key associated with the first linkage mode key and the function sub-mode corresponding to the first function control.

26. The control method of claim 24, wherein when the primary electrical appliance is a later-linked device, the at least one linkage mode key is associated one-to-one with the at least one primary mode key; and
after controlling the dynamic display area to switch from the first interactive interface to the second interactive interface, the control method further comprises:
in response to a selection operation by the user on a second linkage mode key among the at least one linkage mode key and a selection operation by the user on a second function control among the at least one secondary function control, controlling the secondary electrical appliance to start operating according to the operating mode corresponding to the target secondary mode key and a function sub-mode corresponding to the second function control, wherein the second function control is a shared control of the at least one primary function control and the at least one secondary function control; and
in response to an operating parameter of the secondary electrical appliance satisfying a linkage switching condition corresponding to the second linkage mode key, controlling the secondary electrical appliance to stop operating and controlling the primary electrical appliance to start operating according to an operating mode corresponding to a primary mode key associated with the second linkage mode key and the function sub-mode corresponding to the second function control.

27. The control method of claim 21, wherein the secondary electrical appliance comprises a second display panel; and
while controlling the secondary electrical appliance communicatively connected to the primary electrical appliance to start operating according to the operating mode corresponding to the target secondary mode key and the function sub-mode corresponding to the target secondary function control, the control method further comprises:
controlling the dynamic display area to display an operating parameter of the secondary electrical appliance and controlling the second display panel to display the displayed content of the dynamic display area synchronously.

28. The control method of claim 21, wherein the static display area is further fixedly provided with an interconnection trigger key and an interconnection state key; and
before in response to the selection operation by the user on the target secondary mode key among the at least one secondary mode key, the control method further comprises:
when the primary electrical appliance and the secondary electrical appliance are both in a power-on state, in response to a preset trigger operation by the user on the interconnection trigger key, creating a communicative connection relationship between the primary electrical appliance and the secondary electrical appliance; and
controlling the at least one secondary mode key in the static display area to switch from a first display state to a second display state and controlling the interconnection state key in the static display area to switch from the first display state to a third display state.

29. A control apparatus, the control apparatus being configured in a primary electrical appliance, the primary electrical appliance comprising a first display panel, and the control apparatus comprising:
a display control module configured to, when the first display panel is in a first interactive state, in response to a first operation by a user on the first display panel, control the first display panel to switch to a second interactive state; and
a start control module configured to, in response to a second operation by the user on the first display panel in the second interactive state, control a secondary electrical appliance communicatively connected to the primary electrical appliance to start operating based on the second operation.

30. The control apparatus of claim 29, wherein the first interactive state comprises a state in which the first display panel displays a first interactive interface, and the second interactive state comprises a state in which the first display panel displays a second interactive interface;
the display control module is further configured to, in response to a power-on instruction for the primary electrical appliance, control the first display panel to display the first interactive interface;
the display control module is configured to, when the first display panel is in the first interactive state, in response to the first operation by the user on the first display panel, control, in the following manner, the first display panel to switch to the second interactive state:
in response to a selection operation by the user on an interconnection function control in the first interactive interface, acquiring the secondary electrical appliance interconnected with the primary electrical appliance and controlling the first display panel to display the second interactive interface corresponding to the secondary electrical appliance; and
the start control module is configured to, in response to the second operation by the user on the first display panel in the second interactive state, control, in the following manner, the secondary electrical appliance communicatively connected to the primary electrical appliance to start operating based on the second operation:
acquiring a target secondary mode control selected by the user from at least one secondary mode control in the second interactive interface and a target secondary function control selected from at least one secondary function control in the second interactive interface and controlling the secondary electrical appliance to start operating according to an operating mode corresponding to the target secondary mode control and a function sub-mode corresponding to the target secondary function control.

31. The control apparatus of claim 29, wherein the first display panel is fixedly provided with at least one primary function key, at least one shared function key, and at least one secondary mode key; the first interactive state comprises a state in which the first display panel displays the at least one primary function key, the at least one shared function key, and the at least one secondary mode key according to a first preset rule; and the second interactive state comprises a state in which the first display panel displays the at least one primary function key, the at least one shared function key, and the at least one secondary mode key according to a second preset rule;
the display control module is further configured to, in response to a power-on instruction for the primary electrical appliance, control the first display panel to display the at least one primary function key, the at least one shared function key, and the at least one secondary mode key according to the first preset rule;
the display control module is configured to, when the first display panel is in the first interactive state, in response to the first operation by the user on the first display panel, control, in the following manner, the first display panel to switch to the second interactive state:
in response to a target secondary mode key selected from the at least one secondary mode key, controlling the first display panel to display the at least one primary function key, the at least one shared function key, and the at least one secondary mode key according to the second preset rule; and
the start control module is configured to, in response to the second operation by the user on the first display panel in the second interactive state, control, in the following manner, the secondary electrical appliance communicatively connected to the primary electrical appliance to start operating based on the second operation:
in response to a first shared function key selected from the at least one shared function key, controlling the secondary electrical appliance communicatively connected to the primary electrical appliance to start operating according to an operating mode corresponding to the target secondary mode key and a function sub-mode corresponding to the first shared function key.

32. The control apparatus of claim 29, wherein the first display panel comprises a static display area and a dynamic display area, the static display area is fixedly provided with at least one primary mode key and at least one secondary mode key, the first interactive state comprises a state in which the dynamic display area displays a first interactive interface, and the first interactive state comprises a state in which the dynamic display area displays a second interactive interface;
the display control module is configured to, when the first display panel is in the first interactive state, in response to the first operation by the user on the first display panel, control, in the following manner, the first display panel to switch to the second interactive state:
in response to a selection operation by the user on a target secondary mode key among the at least one secondary mode key, controlling the dynamic display area to switch from the first interactive interface to the second interactive interface, wherein the first interactive interface displays at least one primary function control, and the second interactive interface displays at least one secondary function control; and
the start control module is configured to, in response to the second operation by the user on the first display panel in the second interactive state, control, in the following manner, the secondary electrical appliance communicatively connected to the primary electrical appliance to start operating based on the second operation:
in response to a selection operation by the user on a target secondary function control among the at least one secondary function control, controlling the secondary electrical appliance communicatively connected to the primary electrical appliance to start operating according to an operating mode corresponding to the target secondary mode key and a function sub-mode corresponding to the target secondary function control.

33. A control device, comprising a memory, a processor, a bus, and a communication interface, wherein the memory is configured to store computer-executable instructions, and the processor is connected to the memory through the bus; and
the processor is configured to, when the control device is operating, execute the computer-executable instructions stored in the memory to cause the control device to perform the control method of any one of claims 1 to 38.

34. A computer-readable storage medium storing instructions which, when executed by a computer, cause the computer to perform the control method of any one of claims 1 to 28.
